# EUROPEAN PATENT APPLICATION

(11) **EP 4 236 555 A1**
(43) Date of publication of application: **30.08.2023**
(21) Application number: 21883185.7
(22) Date of filing: 19.10.2021
(51) Int. Cl.: H04W 72/12, H04W 72/04, H04W 76/28, H04W 88/06, H04W 92/18

(54) **SIDELINK COMMUNICATION**

(30) Priority: 21.10.2020 KR 20200136752
(71) Applicant: LG Electronics Inc., Yeongdeungpo-gu Seoul, 07336 (KR)
(72) Inventor: YANG, Yoonoh, Seoul 06772 (KR); LEE, Seungmin, Seoul 06772 (KR); LEE, Sangwook, Seoul 06772 (KR); LIM, Suhwan, Seoul 06772 (KR); HWANG, Jinyup, Seoul 06772 (KR); PARK, Jinwoong, Seoul 06772 (KR)
(74) Representative: Maikowski & Ninnemann Patentanwälte Partnerschaft mbB
(86) International application number: PCT/KR2021/014568
(87) International publication number: WO 2022/086116

(57) **Abstract**

A disclosure of the present specification provides a method by which a UE performs sidelink communication. The method may comprise the steps of: performing NR SL communication on a first CC; performing NR SL communication or LTE SL communication on a second CC; and performing an operation related to NR SL DRX on the first CC.

## Description

### TECHNICAL FIELD

The present disclosure relates to mobile communication.

### Background Art

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

Sidelink (SL) communication is a communication scheme in which a direct link is established between User Equipments (UEs), and the UEs exchange voice and data directly with each other without intervention of a base station (BS). SL communication is under consideration as a solution to the overhead of a BS caused by rapidly increasing data traffic.

When performing NR SL communication, the UE may perform NR SL Discontinuous Reception (DRX). The terminal may perform two types of communication on different carriers. For example, the terminal may perform NR SL communication and LTE SL communication, NR SL communication and NR SL communication, or NR SL communication and NR Uu (or LTE Uu) communication. In this case, interruption may occur due to the NR SL DRX operation.

However, conventionally, the NR SL DRX operation is not clearly defined, and the interruption due to the NR SL DRX operation is also not clearly defined. Due to this, there is a problem that the terminal cannot clearly or effectively perform NR SL communication and other communication (e.g., LTE SL communication, NR SL communication, or NR Uu (or LTE Uu) communication).

### Disclosure

### Technical Problem

Accordingly, a disclosure of the present specification has been made in an effort to solve the aforementioned problem.

### Technical Solution

In order to solve the above problems, one disclosure of the present specification provides a method for a UE to perform sidelink communication. The method includes performing NR SL communication on a first CC; performing NR SL communication or LTE SL communication on a second CC; and performing an operation related to NR SL DRX on the first CC.

In order to solve the above problems, one disclosure of the present specification provides a UE performing sidelink communication. The UE includes at least one transceiver; at least one processor; and at least one memory that stores instructions and is operatively electrically connectable with the at least one processor. Operations performed based on the command being executed by the at least one processor may include: performing NR SL communication on a first CC; Performing NR SL communication or LTE SL communication on a second CC; and performing an operation related to NR SL DRX on the first CC.

In order to solve the above problems, one disclosure of the present specification provides a device in mobile communication. The device includes at least one processor; and at least one memory that stores instructions and is operably electrically connectable with the at least one processor, wherein the instructions are executed based on execution by the at least one processor. The operation to be performed is: performing NR SL communication on the first CC; Performing NR SL communication or LTE SL communication on a second CC; and performing an operation related to NR SL DRX on the first CC.

In order to solve the above problems, one disclosure of the present specification provides a non-volatile (non-volatile) computer readable storage medium recording instructions. The instructions, when executed by one or more processors, cause the one or more processors to: perform NR SL communication on a first CC; Performing NR SL communication or LTE SL communication on a second CC; and performing an operation related to NR SL DRX on the first CC.

### Advantageous Effects

According to the disclosure of the present specification, it is possible to solve the problems of the prior art.

Effects that can be obtained through specific examples of the present specification are not limited to the effects listed above. For example, various technical effects that a person having ordinary skill in the related art can understand or derive from the present specification may exist. Accordingly, the specific effects of the present specification are not limited to those explicitly described herein, and may include various effects that can be understood or derived from the technical characteristics of the present specification.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of a wireless device to which implementations of the present disclosure are applied.
FIG. 4 illustrates an example of a structure of an NR system to which the implementation of the present disclosure is applied.
FIG. 5 illustrates an example of a structure of a slot of an NR system to which the implementation of the present disclosure is applied.
FIGS. 6a and 6b illustrate an example of a radio protocol architecture for a SL communication to which the implementation of the present disclosure is applied.
FIG. 7 illustrates an example of a UE performing V2X or SL communication to which the implementation of the present disclosure is applied.
FIGS. 8a and 8b illustrate an example of a procedure of performing V2X or SL communication by a UE based on a transmission mode to which the implementation of the present disclosure is applied.
FIG. 9 shows an example schematically illustrating the relationship between uplink timing and downlink timing.
FIG. 10 shows an example schematically illustrating the relationship between downlink timing and sidelink timing.
FIGS. 11a and 11b show an example of NR DRX configuration according to an embodiment of the disclosure of the present specification.
FIG. 12 illustrates an example in which transition between NR SL DRX and NR SL Non-DRX is performed while LTE SL communication is performed.
FIG. 13 illustrates an example in which transition between active and non-active is performed in NR SL DRX while LTE SL communication is performed.
FIG. 14 shows an example in which transition between NR SL DRX and NR SL Non-DRX is performed during the ON duration of NR SL DRX in another carrier.
FIG. 15 shows an example in which transition between active and non-active is performed in NR SL DRX during the ON duration of NR SL DRX in another carrier.
FIG. 16 shows an example in which transition between NR SL DRX and NR SL Non-DRX is performed during the off duration of NR SL DRX in another carrier.
FIG. 17 shows an example in which transition between active and non-active is performed in NR SL DRX during the off duration of NR SL DRX in another carrier.
FIG. 18 illustrates an example in which a terminal provides capability information according to a third example of the disclosure of the present specification.
FIG. 19 shows an example of an inter-band combination that can be used in one embodiment of the present disclosure.
FIG. 20 shows an example of an intra-band combination that can be used in one embodiment of the disclosure of the present specification.
FIG. 21 shows an example of an operation of a terminal according to an embodiment of the disclosure of the present specification.

### Mode for Invention

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G NR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

In the accompanying drawings, a User Equipment (UE) is shown in an exemplary manner, however, the shown UE may also be referred to as a term such as a Terminal, a Mobile Equipment (ME), and the like. Furthermore, the UE may be not only a portable device such as a notebook, a mobile phone, a PDA, a smart phone, a multimedia device, and the like, but also a non-portable device such as a PC and a vehicle mounted device.

Hereinafter, a UE is used as an example of a wireless communication device (or wireless apparatus or a wireless device) for which wireless communication is available. The operation performed by a UE may be performed by a wireless communication device. The wireless communication device may also be referred to as a wireless apparatus or a wireless device. Hereinafter, an AMF may mean an AMF node, an SMF may mean an SMF node, and a UPF may mean a UPF node.

The term, "base station" used below may be referred to as a fixed station that communicates with a wireless device, generally, and may also be called a different term such as an evolved-NodeB (eNodeB), an evolved-NodeB (eNB), a Base Transceiver System (BTS), an Access Point, a Next generation NodeB (gNB), and the like.

### I. Technique and procedure applicable to the disclosure of the present specification.

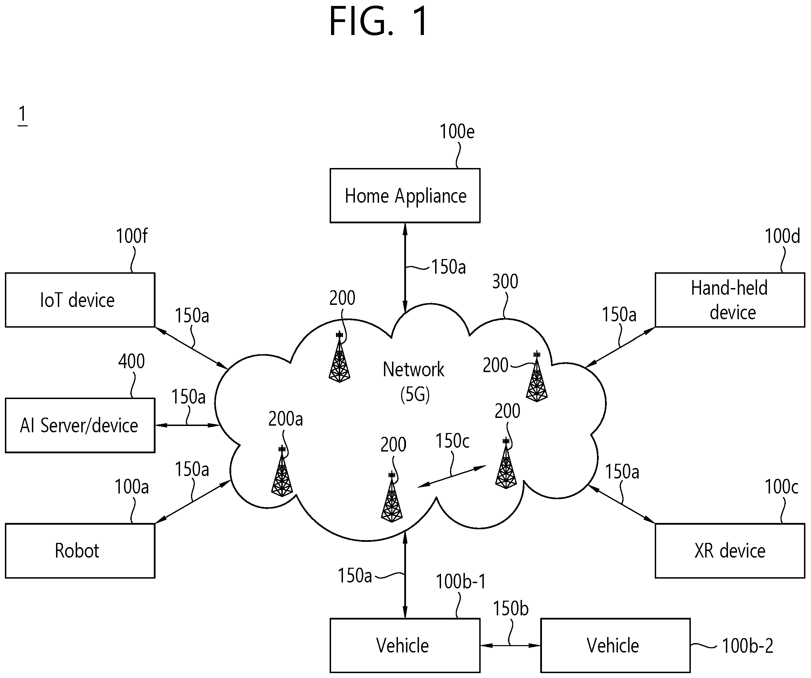

FIG. 1 shows an example of a communication system to which implementations of the present disclosure is applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Partial use cases may require a plurality of categories for optimization and other use cases may focus only upon one key performance indicator (KPI). 5G supports such various use cases using a flexible and reliable method.

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB 1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

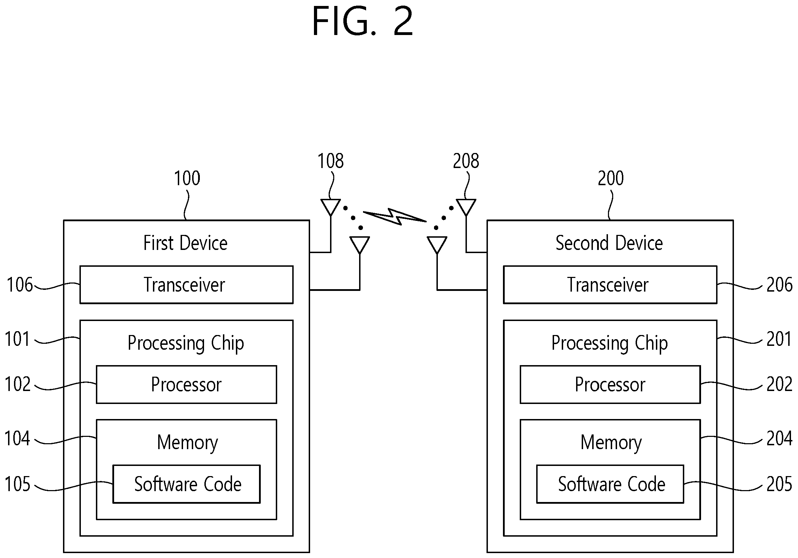

**FIG. 2** **shows an example of wireless devices to which implementations of the present disclosure is applied.**

Referring to FIG. 2, a first wireless device 100 and a second wireless device 200 may transmit/receive radio signals to/from an external device through a variety of RATs (e.g., LTE and NR).

In FIG. 2, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. It is exemplarily shown in FIG. 2 that the memory 104 is included in the processing chip 101. Additional and/or alternatively, the memory 104 may be placed outside of the processing chip 101.

The processor 102 may control the memory 104 and/or the transceiver 106 and may be configured to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a software code 105 which implements instructions that, when executed by the processor 102, perform the descriptions, functions, procedures, suggestions, methods and/or operational flowcharts disclosed in the present disclosure. For example, the software code 105 may implement instructions that, when executed by the processor 102, perform the descriptions, functions, procedures, suggestions, methods and/or operational flowcharts disclosed in the present disclosure. For example, the software code 105 may control the processor 102 to perform one or more protocols. For example, the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with radio frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. It is exemplarily shown in FIG. 2 that the memory 204 is included in the processing chip 201. Additional and/or alternatively, the memory 204 may be placed outside of the processing chip 201.

The processor 202 may control the memory 204 and/or the transceiver 206 and may be configured to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a software code 205 which implements instructions that, when executed by the processor 202, perform the descriptions, functions, procedures, suggestions, methods and/or operational flowcharts disclosed in the present disclosure. For example, the software code 205 may implement instructions that, when executed by the processor 202, perform the descriptions, functions, procedures, suggestions, methods and/or operational flowcharts disclosed in the present disclosure. For example, the software code 205 may control the processor 202 to perform one or more protocols. For example, the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as physical (PHY) layer, media access control (MAC) layer, radio link control (RLC) layer, packet data convergence protocol (PDCP) layer, radio resource control (RRC) layer, and service data adaptation protocol (SDAP) layer). The one or more processors 102 and 202 may generate one or more protocol data units (PDUs) and/or one or more service data unit (SDUs) according to the descriptions, functions, procedures, suggestions, methods and/or operational flowcharts disclosed in the present disclosure. The one or more processors 102 and 202 may generate messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, suggestions, methods and/or operational flowcharts disclosed in the present disclosure may be implemented using firmware or software and the firmware or software may be configured to include the modules, procedures, or functions. Firmware or software configured to perform the descriptions, functions, procedures, suggestions, methods and/or operational flowcharts disclosed in the present disclosure may be included in the one or more processors 102 and 202 or stored in the one or more memories 104 and 204 so as to be driven by the one or more processors 102 and 202. The descriptions, functions, procedures, suggestions, methods and/or operational flowcharts disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and down-convert the OFDM signals into OFDM baseband signals by their (analog) oscillators and/or filters under the control of the one or more processors 102 and 202.

In the implementations of the present disclosure, a UE may operate as a transmitting device in uplink (UL) and as a receiving device in downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be configured to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be configured to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

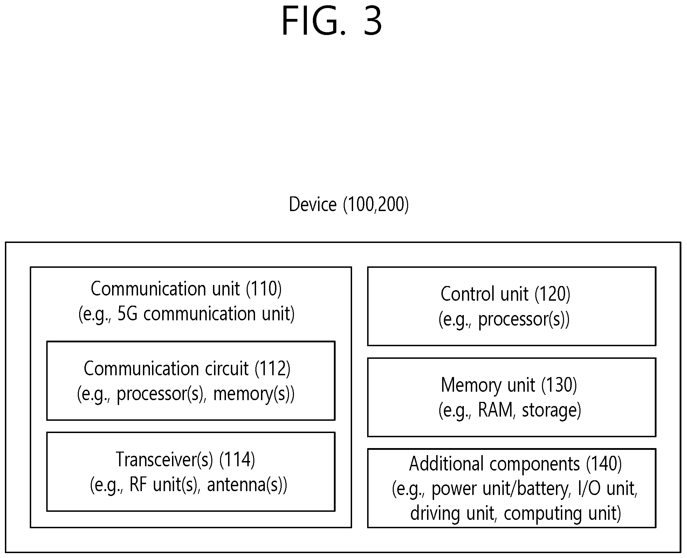

**FIG. 3** **shows an example of a wireless device to which implementations of the present disclosure is applied.**

The wireless device may be implemented in various forms according to a use-case/service (refer to FIG. 1).

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 of FIG. 2 and/or the one or more memories 104 and 204 of FIG. 2. For example, the transceiver(s) 114 may include the one or more transceivers 106 and 206 of FIG. 2 and/or the one or more antennas 108 and 208 of FIG. 2. The control unit 120 is electrically connected to the communication unit 110, the memory unit 130, and the additional components 140 and controls overall operation of each of the wireless devices 100 and 200. For example, the control unit 120 may control an electric/mechanical operation of each of the wireless devices 100 and 200 based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of the wireless devices 100 and 200. For example, the additional components 140 may include at least one of a power unit/battery, input/output (I/O) unit (e.g., audio I/O port, video I/O port), a driving unit, and a computing unit. The wireless devices 100 and 200 may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast terminal, a hologram device, a public safety device, an MTC device, a medicine device, a FinTech device (or a finance device), a security device, a climate/environment device, the AI server/device (400 of FIG. 1), the BSs (200 of FIG. 1), a network node, etc. The wireless devices 100 and 200 may be used in a mobile or fixed place according to a use-example/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor (AP), an electronic control unit (ECU), a graphical processing unit, and a memory control processor. As another example, the memory unit 130 may be configured by a RAM, a DRAM, a ROM, a flash memory, a volatile memory, a non-volatile memory, and/or a combination thereof.

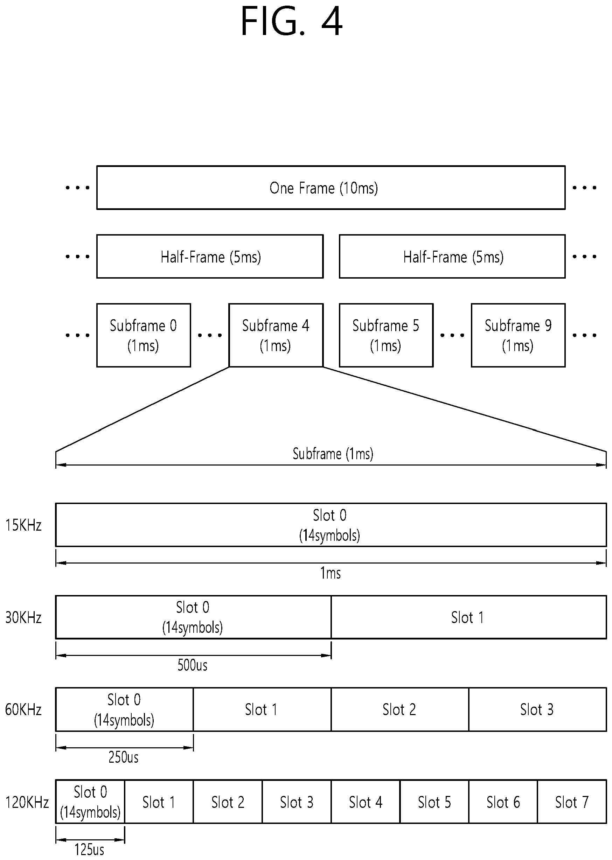

**FIG. 4** **illustrates an example of a structure of an NR system to which the implementation of the present disclosure is applied.**

FIG. 4 shows a structure of an NR system, in accordance with an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10 ms and may be defined to be configured of two half-frames (HFs). A half-frame may include five 1 ms subframes (SFs). A subframe (SF) may be divided into one or more slots, and the number of slots within a subframe may be determined in accordance with subcarrier spacing (SCS). Each slot may include 12 or 14 OFDM(A) symbols according to a cyclic prefix (CP).

In the case that a normal CP is used, each slot may include 14 symbols. In the case that an extended CP is used, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

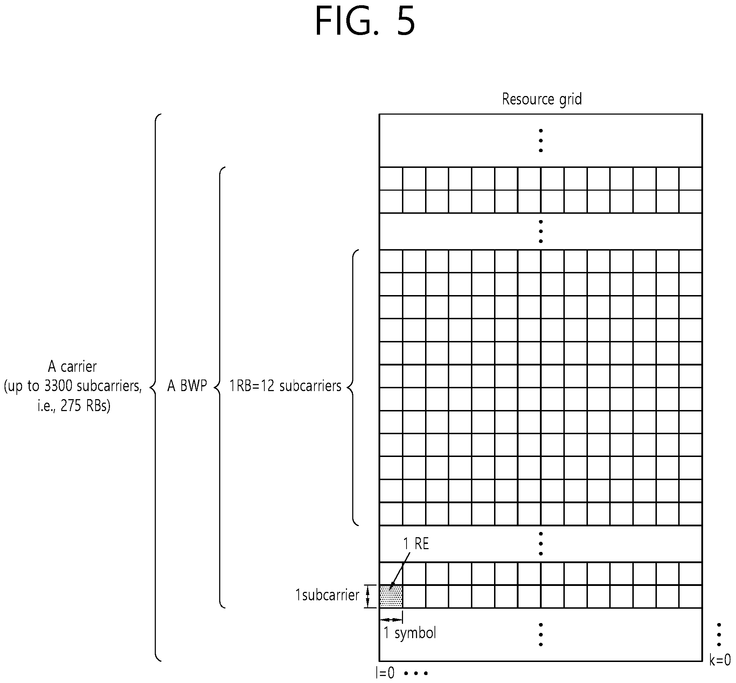

**FIG. 5** **illustrates an example of a structure of a slot of an NR system to which the implementation of the present disclosure is applied.**

FIG. 5 shows a structure of a slot of an NR frame, in accordance with an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one type of numerology (e.g., SCS, CP length, etc.). A carrier may include a maximum of N BWPs (e.g., 5 BWPs). Data communication may be performed via an activated BWP. Each element may be referred to as a Resource Element (RE) within a resource grid and one complex symbol may be mapped to each element.

Meanwhile, a radio interface between a UE and another UE or a radio interface between the UE and a network may consist of an L1 layer, an L2 layer, and an L3 layer. In various embodiments of the present disclosure, the L1 layer may imply a physical layer. In addition, for example, the L2 layer may imply at least one of a MAC layer, an RLC layer, a PDCP layer, and an SDAP layer. In addition, for example, the L3 layer may imply an RRC layer.

Hereinafter, V2X or SL communication will be described.

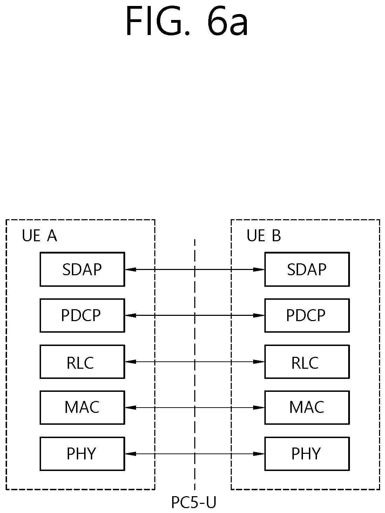

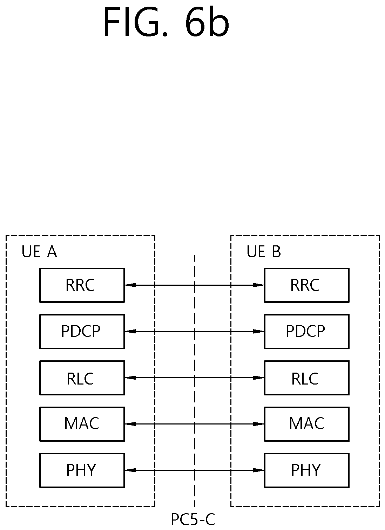

**FIGS. 6a** **and** **6b** **illustrate an example of a radio protocol architecture for a SL communication to which the implementation of the present disclosure is applied.**

FIG. 6a and FIG. 6b show a radio protocol architecture for a SL communication, in accordance with an embodiment of the present disclosure. The embodiment of FIG. 6a and FIG. 6b may be combined with various embodiments of the present disclosure. More specifically, FIG. 6a shows a user plane protocol stack, and FIG. 6b shows a control plane protocol stack.

Hereinafter, a sidelink synchronization signal (SLSS) and synchronization information will be described.

The SLSS may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which needs to be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit CRC.

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

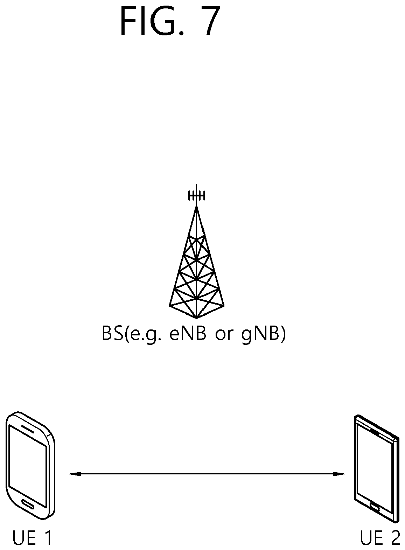

FIG. 7 illustrates an example of a UE performing V2X or SL communication to which the implementation of the present disclosure is applied.

FIG. 7 shows a UE performing V2X or SL communication, in accordance with an embodiment of the present disclosure. The embodiment of FIG. 7 may be combined with various embodiments of the present disclosure.

Referring to FIG. 7, in V2X or SL communication, the term "terminal" may generally imply a UE of a user. However, in the case that a network equipment such as a BS transmits/receives a signal according to a communication scheme between UEs, the BS may also be regarded as a sort of the UE. For example, a UE 1 may be a first apparatus 100, and a UE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, in the case that the UE 1 is within a connectivity range of the BS, the BS may inform the UE 1 of the resource pool. On the other hand, in the case that the UE 1 is out of the connectivity range of the BS, another UE may inform the UE 1 of the resource pool, or the UE 1 may use a pre-configured resource pool.

In general, the resource pool may be configured in units of a plurality of resources, and each UE may select a unit of one or a plurality of resources to use it in SL signal transmission thereof.

Hereinafter, resource allocation in SL will be described.

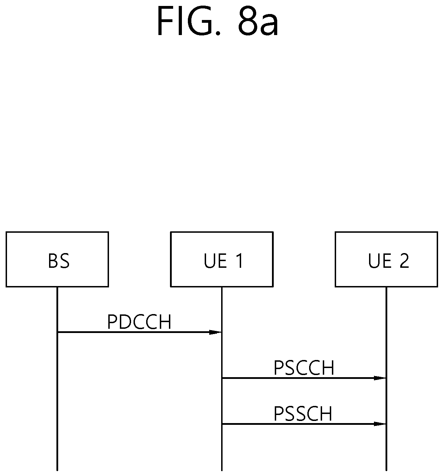

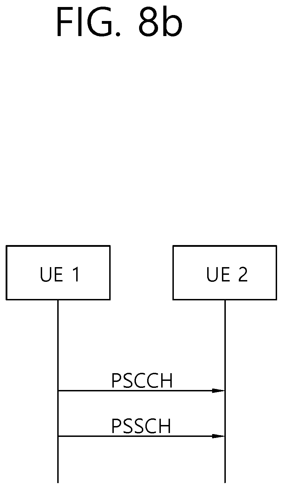

FIGS. 8a and 8b illustrate an example of a procedure of performing V2X or SL communication by a UE based on a transmission mode to which the implementation of the present disclosure is applied.

FIG. 8a and FIG. 8b show a procedure of performing V2X or SL communication by a UE based on a transmission mode, in accordance with an embodiment of the present disclosure. The embodiment of FIG. 8a and FIG. 8b may be combined with various embodiments of the present disclosure. In various embodiments of the present disclosure, the transmission mode may be called a mode or a resource allocation mode. Hereinafter, for the convenience of explanation, in LTE, the transmission mode may be called an LTE transmission mode. In NR, the transmission mode may be called an NR resource allocation mode.

For example, FIG. 8a shows a UE operation related to an LTE transmission mode 1 or an LTE transmission mode 3. Alternatively, for example, FIG. 8a shows a UE operation related to an NR resource allocation mode 1. For example, the LTE transmission mode 1 may be applied to general SL communication, and the LTE transmission mode 3 may be applied to V2X communication.

For example, FIG. 8b shows a UE operation related to an LTE transmission mode 2 or an LTE transmission mode 4. Alternatively, for example, FIG. 8b shows a UE operation related to an NR resource allocation mode 2.

Referring to FIG. 8a, in the LTE transmission mode 1, the LTE transmission mode 3, or the NR resource allocation mode 1, a BS may schedule an SL resource to be used by the UE for SL transmission. For example, the BS may perform resource scheduling to a UE 1 through a PDCCH (more specifically, downlink control information (DCI)), and the UE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the UE 2 through a physical sidelink shared channel (PSSCH).

Referring to FIG. 8b, in the LTE transmission mode 2, the LTE transmission mode 4, or the NR resource allocation mode 2, the UE may determine an SL transmission resource within an SL resource configured by a BS/network or a pre-configured SL resource. For example, the configured SL resource or the pre-configured SL resource may be a resource pool. For example, the UE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in units of subchannels. In addition, the UE 1 which has autonomously selected the resource within the resource pool may transmit the SCI to the UE 2 through a PSCCH, and thereafter may transmit data based on the SCI to the UE 2 through a PSSCH.

For reference, Table 3 below represents an example of an operating band used for V2X (or SL) communication.

**[Table 3]**

| Operating Band | V2X Operating Band | V2X UE transmit | V2X UE receive | Duplex Mode | Interface |
|---|---|---|---|---|---|
| | | F_{UL_low} - F_{UL}__{high} | F_{DL_low} - F_{DL_high} | | |
| 47 | 47 | 5855 MHz - 5925 MHz | 5855 MHz - 5925 MHz | HD(Half Duplex) | PCS |
| 39 | 39 | 1880 MHz - 1920MHz | 1880 MHz - 1920MHz | TDD | PCS and/or Uu |

In the case that an operating band 47 according to the example of Table 3 is used for E-UTRA V2X (or SL) communication, the operating band 47 may be referred to as B47. In the case that the operating band 47 according to the example of Table 3 is used for NR V2X (or SL) communication, the operating band 47 may be referred to as n47.

In the case that an operating band 39 according to the example of Table 3 is used for E-UTRA V2X (or SL) communication, the operating band 39 may be referred to as B39. In the case that the operating band 39 according to the example of Table 3 is used for NR V2X (or SL) communication, the operating band 39 may be referred to as n39.

For reference, at least one proposal scheme proposed according to various embodiments of the present disclosure may be applied to not only sidelink communication or V2X communication based on a PCS interface or an SL interface (e.g., PSCCH, PSSCH, PSBCH, PSSS/SSSS, etc.), but also sidelink communication or V2X communication based on a Uu interface (e.g., PUSCH, PDSCH, PDCCH, PUCCH, etc.).

In the various embodiments of the present disclosure, a receiving operation of a TERMINAL may include a decoding operation and/or a receiving operation of a sidelink channel and/or a sidelink signal (e.g., Physical Sidelink Control CHannel (PSCCH), Physical Sidelink Shared Channe (PSSCH), physical sidelink feedback channel (PSFCH), Physical Sidelink Broadcast CHannel (PSBCH), primary sidelink synchronization signal (PSSS)/secondary sidelink synchronization signal (SSSS), etc.). In the various embodiments of the present disclosure, a transmitting operation of a TERMINAL may include a transmitting operation of a sidelink channel and/or a sidelink signal (e.g., PSCCH, PSSCH, PSFCH, PSBCH, PSSS/SSSS, etc.).

Meanwhile, in the various embodiments of the present disclosure, for example, for the convenience of description, a (physical) channel used for an RX UE to transmit at least one of the following information to a TX UE may be referred to as PSFCH.

### - SL HARQ feedback, SL CSI, SL (L1) RSRP

Meanwhile, in the various embodiments of the present disclosure, a Uu channel may include a UL channel and/or a DL channel. For example, the UL channel may include PUSCH, PUCCH, and the like. For example, the DL channel may include PDCCH, PDSCH, and the like. For example, an SL channel may include PSCCH, PSSCH, PSFCH, PSBCH, and the like.

### <Timing Advance (TA)>

Hereinafter, a timing advance (TA) related to transmission of a signal on a specific carrier (e.g., NR UL signal transmission or NR V2X (or SL) signal transmission) will be described.

1. Before describing the method for determining the timing advance value associated with the D2D transmission, the symbols and abbreviations associated with the timing advance values are as follows.
- Tₛ: Basic time unit. For reference, instead of Tₛ, T_{c} may be used as a basic time unit. For example, in NR-based communication, T_{c} may be used as a basic time unit.
- N_{TA}: Timing offset between the uplink and the downlink in the terminal, expressed in units of Ts
- N_{TA offset}: Fixed timing advance offset, expressed in units of Ts
- N_{TA,SL}: Timing offset between a sidelink and timing reference frames in the terminal, expressed in units of Ts

### 2. Frame structure

In the time domain, the sizes of various fields may be expressed as the number of time units, i.e. Ts = 1 / (15000 x 2048) seconds.

Downlink, uplink, and, sidelink transmissions may be configured into THE radio frames with Tf = 307200 x Ts = 10 ms duration.

Hereinafter, two types of radio frame structures may be supported.
- Type 1: Applicable to FDD
- Type 2: Applicable to TDD

Transmissions in multiple cells may be aggregated with a maximum of four secondary cells in addition to the primary cell. In multi-cell aggregation, different frame structures may be used in different serving cells.

### 3. Uplink-downlink frame timing

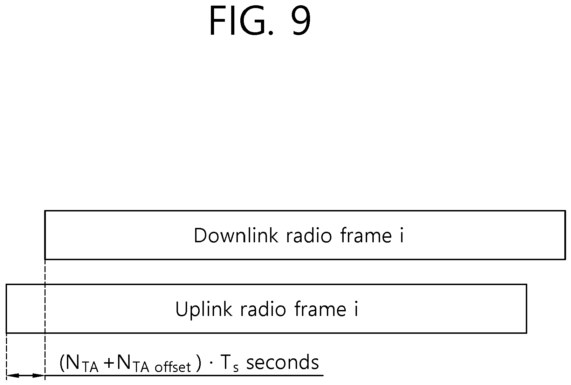

**FIG. 9** **shows an example schematically illustrating the relationship between uplink timing and downlink timing.**

FIG. 9 schematically illustrates an uplink-downlink timing relationship. As illustrated in FIG. 9, transmission of uplink radio frame number i from the terminal may start earlier than a corresponding downlink radio frame in the terminal by (NTA + NTAoffset) xTs second (where 0 <= N_{TA} <= 20412).

Here, in the case of LTE, for frame structure type 1, N_{TAoffset} may be '0Ts (= 0us)', and for frame structure type 2, N_{TAoffset} may correspond to '624Ts (= 20us)'.

In the case of NR, the following may apply:

For frame structure type 1 and frame structure type 2, when NR and LTE do not coexist in the same frequency band corresponding to Frequency Range 1, N_{TAoffset} may correspond to '25600Tc (=400Ts=13us)';

For frame structure type 1, when NR and LTE coexist in the same frequency band corresponding to Frequency Range 1, N_{TAoffset} may correspond to '0Tc (=0Ts=0us)';

For frame structure type 2, when NR and LTE coexist in the same frequency band corresponding to Frequency Range 1, N_{TAoffset} may correspond to '39936Tc (=624Ts=20us)';

For frame structure type 2, in the case of NR of a frequency band corresponding to Frequency Range 2, N_{TAoffset} may correspond to '13792Tc (= 215.5Ts = 7us)'.

### 4. Timing

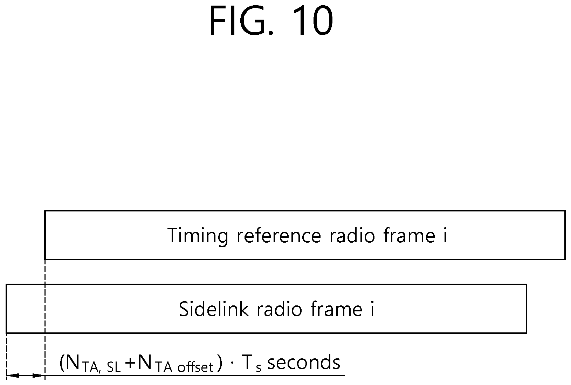

**FIG.10** **shows an example schematically illustrating the relationship between downlink timing and sidelink timing.**

As illustrated in FIG. 10, transmission of sidelink radio frame number i from the terminal may start earlier than a corresponding timing reference frame in the terminal by (N_{TA,SL}+N_{TAoffset})xTₛ second (where 0 <= N_{TA} <= 20412).

The terminal may not need to receive the sidelink or the downlink transmission earlier than (N_{TA,SL}+N_{TAoffset})xTₛ after the sidelink transmission is finished.

In the case where the terminal has a serving cell satisfying an S criterion,
- The timing of the reference radio frame i may be the same as the downlink radio frame i in the same frame.
- A specific value corresponding to N_{TAoffset} may be given.

In other cases,
- The timing of the reference radio frame i can be obtained by being inherent by a predetermined method.
- N_{TAoffset} = 0

For example, the values of N_{TA},_{SL} between channels and signals may be as in the example below:

For PSSCH in sidelink transmission mode 1, N_{TA}, _{SL} may be equal to N_{TA}. In all other cases, N_{TA,SL} may be zero.

### II. DISCLOSURES OF THE PRESENT SPECIFICATION

The disclosures described below in the present specification may be implemented in one or more combinations (e.g., a combination including at least one of the contents described below). Each of the drawings shows an embodiment of each disclosure, but the embodiments of the drawings may be implemented in combination with each other.

The description of the method proposed in the disclosure of the present specification may consist of a combination of one or more operations/configurations/steps described below. The following methods described below may be performed or used in combination or complementary.

For reference, in the disclosure of the present specification, the sidelink (SL), V2X, and V2X sidelink (SL) may be used as the same meaning.

When performing NR SL communication, the terminal may perform NR SL Discontinuous Reception (DRX). The terminal may perform two types of communication on different carriers. For example, the terminal may perform NR SL communication and LTE SL communication, NR SL communication and NR SL communication, or NR SL communication and NR Uu (or LTE Uu) communication. In this case, interruption may occur due to the NR SL DRX operation. However, conventionally, the NR SL DRX operation is not clearly defined, and the interruption due to the NR SL DRX operation is also not clearly defined. Due to this, there is a problem that the terminal cannot clearly or effectively perform NR SL communication and other communication (e.g., LTE SL communication, NR SL communication, or NR Uu (or LTE Uu) communication).

The present specification describes an interruption caused by an NR SL DRX operation of a terminal through various examples.

For example, when a terminal supports both LTE sidelink (SL) and NR sidelink (SL) in different carriers, when the terminal performs NR SL DRX (Discontinuous Reception), an interruption for LTE SL will be described. In addition, when the terminal supports both NR SL and NR SL in different carriers, when a terminal performs NR SL DRX, an interruption to another carrier's NR SL will be described. In addition, when the terminal supports NR SL and NR / LTE Uu in different carriers, when performing NR SL DRX (Discontinuous Reception), an interruption to NR Uu or LTE Uu of another carrier will be described.

In NR SL communication, NR SL Discontinuous Reception (DRX) may be used to reduce unnecessary power consumption of a terminal. The terminal may perform the NR SL DRX operation based on the NR SL DRX configuration. In general, a terminal performs an NR SL DRX operation through NR SL DRX configuration in an NR SL non-DRX state. For example, the terminal may receive NR SL DRX configuration from the base station in the NR SL non-DRX state. And, the terminal may perform the NR SL DRX operation based on the NR SL DRX configuration.

NR SL DRX configuration may include a method in which the network informs the terminal and a method in which the terminal configures itself through a pre-configuration method. For example, the terminal may receive NR SL DRX configuration from the network. For another example, NR SL DRX configuration may be preset in the terminal.

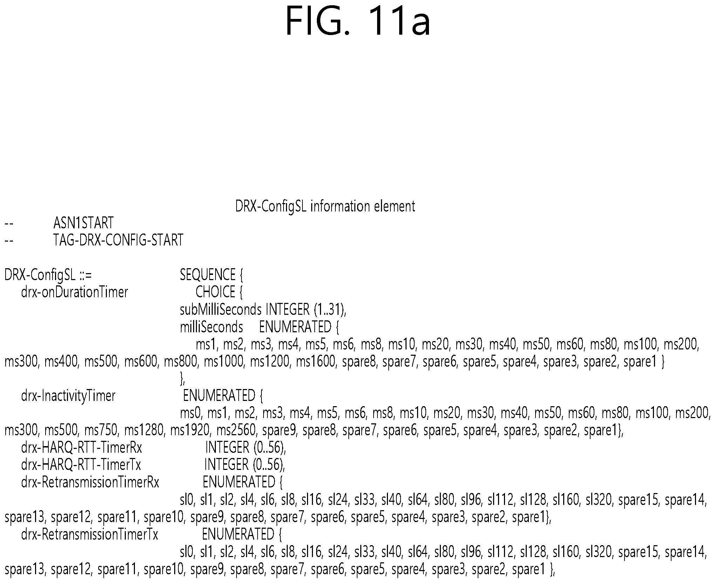

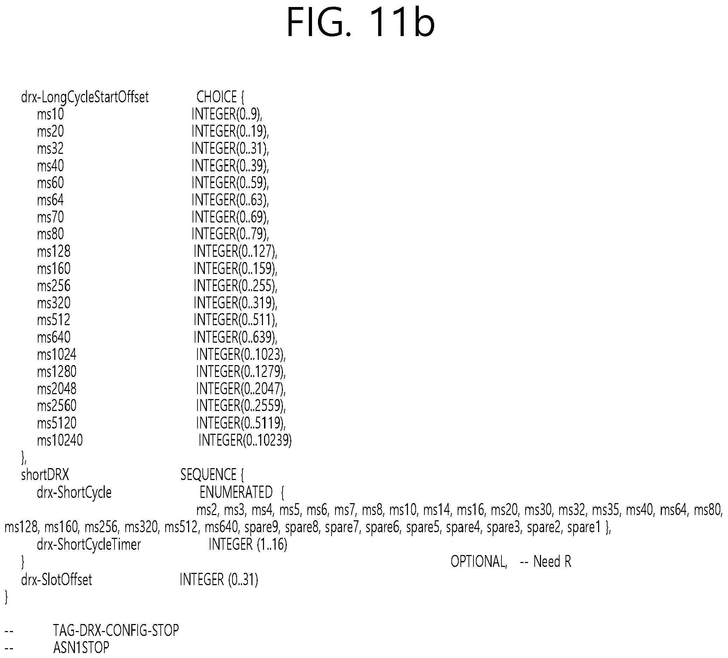

NR SL DRX configuration, similar to NR DRX configuration parameters (3GPP TS38.331 V16.1.0), may be set as in the examples of FIGS. 11a and 11b.

The following drawings are made to explain a specific example of the present specification. Since the names of specific devices or names of specific signals/messages/fields described in the drawings are provided as examples, the technical features of the present specification are not limited to the specific names used in the drawings below.

FIGS. 11a and 11b show an example of NR DRX configuration according to an embodiment of the disclosure of the present specification.

The examples of FIGS. 11a and 11b show an example of an NR DRX configuration information element (IE). The NR DRX configuration IE according to the examples of FIGS. 11a and 11b may also be referred to as *DRX-CofigSL. DRX-ConfigSL* can be used to configure parameters related to SL DRX.

Referring to Table 4 below, information included in the examples of FIGS. 11a and 11b will be described.

**[Table 4]**

| DRX-ConfigSL field descriptions |
|---|
| drx-HARQ-RTT-TimerRx |
| Value in number of symbols of the SL BWP where the transport block was received. |
| drx-HARQ-RTT-TimerTx |
| Value in number of symbols of the SL BWP where the transport block was transmitted. |
| drx-InactivityTimer |
| Value in multiple integers of 1 ms. ms0 corresponds to 0, ms1 corresponds to 1 ms, ms2 corresponds to 2 ms, and so on. |
| drx-LongCycleStartOffset |
| drx-LongCycle in ms and drx-StartOffset in multiples of 1 ms. If drx-ShortCycle is configured, the value of drx-LongCycle shall be a multiple of the drx-ShortCycle value. |
| drx-onDurationTimer |
| Value in multiples of 1/32 ms (subMilliSeconds) or in ms (milliSecond). For the latter, value ms1 corresponds to 1 ms, value ms2 corresponds to 2 ms, and so on. |
| drx-RetransmissionTimerRx |
| Value in number of slot lengths of the SL BWP where the transport block was received. value s10 corresponds to 0 slots, sl1 corresponds to 1 slot, s12 corresponds to 2 slots, and so on. |
| drx-RetransmissionTimer |
| Value in number of slot lengths of the SL BWP where the transport block was transmitted. s10 corresponds to 0 slots, sl1 corresponds to 1 slot, s12 corresponds to 2 slots, and so on. |
| drx-ShortCycle |
| Value in multiples of drx-ShortCycle. A value of 1 corresponds to drx-ShortCycle, a value of 2 corresponds to 2 * drx-ShortCycle and so on |
| drx-ShortCycle |
| Value in ms. ms1 corresponds to 1 ms, ms2 corresponds to 2 ms, and so on |
| drx-SlotOffset |
| Value in 1/32 ms. Value 0 corresponds to 0 ms, value 1 corresponds to 1/32 ms, value 2 corresponds to 2/32 ms, and so on. |

Various information shown in FIGS. 11a and 11b may be interpreted according to the example of Table 4.

Hereinafter, with reference to various examples, when the NR DRX configuration is configured for the terminal, the operation and interruption of the terminal will be described.

### 1. Fist example of the present disclosure

The first example of the disclosure of the present specification will describe an example of a case in which the network configures the NR SL DRX configuration for the terminal with reference to various examples.

When the network configures the NR SL DRX configuration for the terminal, the terminal can perform transition from NR SL to NR SL Non-DRX to NR SL DRX. The terminal may perform active (on-duration) and non-active (off-duration) operations in the switched NR SL DRX state. For reference, NR SL Non-DRX may mean a state in which the NR SL DRX operation is not performed when the terminal performs NR SL communication.

For reference, a terminal supporting both LTE SL and NR SL may implement LTE SL and NR SL with individual chips, or implement both LTE SL and NR SL with a single chip. Here, the individual chips may mean that a communication chip for LTE SL communication and a communication chip for NR SL communication are separately implemented in the terminal. Here, a single chip may mean that a single communication chip in a terminal implements both LTE SL and NR SL. For reference, when a terminal supports both NR SL and NR SL in different carriers, the description of individual chip and single chip can be equally applied even when supporting NR SL and NR/LTE Uu.

When implemented as a single chip, interruption may occur due to transient effects caused by PLL (Phase Locked Loop) and VCOs (Voltage Controlled Oscillators). In a single chip implementation, transient effects generated by PLLs and VCOs that share the same power supply and non-ideal isolation can affect the received signal and create interruptions. For example, even if the signal itself is not interrupted, phase changes and amplitude changes may disrupt the signal.

For example, transient effects can occur in the following 4 cases.
Case 1: When a transition from NR SL Non-DRX to NR SL DRX is performed
Case 2: When a transition from NR SL DRX to NR SL Non-DRX is performed
Case 3: When a transition from active to non-active is performed while NR SL DRX is running
Case 4: When a transition from non-active to active is performed while NR SL DRX is performed

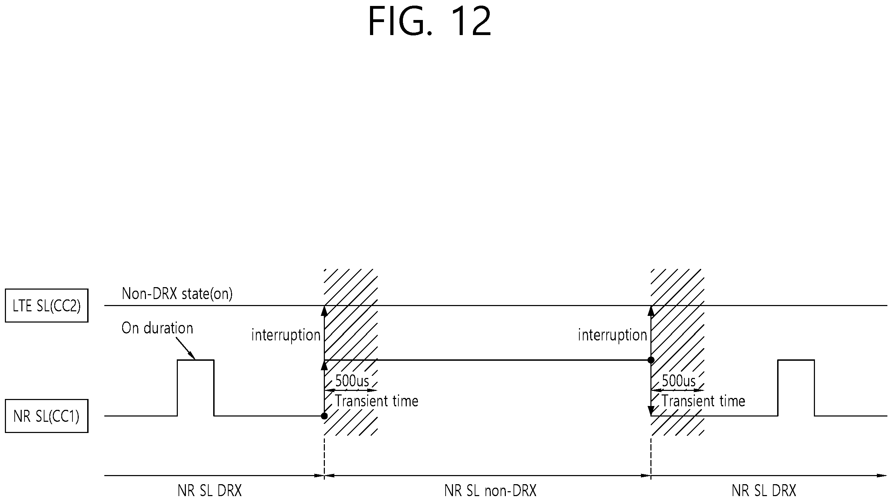

Hereinafter, various examples of transition will be described with reference to examples of FIGS. 12 to 17. In the following various examples, transient effects may occur according to the examples of Cases 1 to 4 described above.

### i) If the terminal supports NR SL communication and LTE SL communication

When the terminal supports NR SL communication and LTE SL communication, various examples of transition related to the NR SL DRX operation of the terminal will be described.

FIG. 12 illustrates an example of a case in which a terminal performs transition between NR SL DRX and NR SL Non-DRX in NR SL communication (e.g., Case 1 and Case 2) while LTE SL communication is being performed.

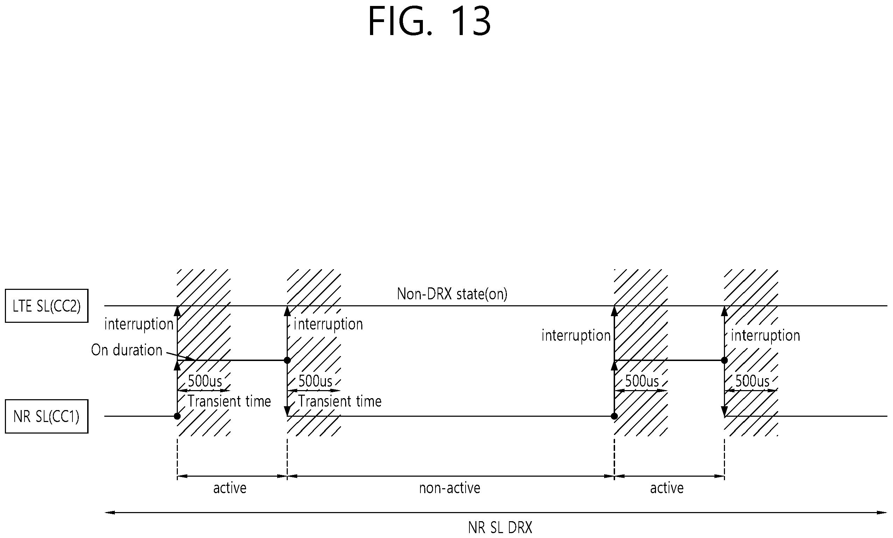

FIG. 13 shows an example of a case in which the terminal performs transition between active and non-active in NR SL DRX while LTE SL communication is being performed (e.g., Case 3 and Case 4).

The following drawings are made to explain a specific example of the present specification. Since the names of specific devices or names of specific signals/messages/fields described in the drawings are provided as examples, the technical features of the present specification are not limited to the specific names used in the drawings below.

**FIG. 12** **illustrates an example in which transition between NR SL DRX and NR SL Non-DRX is performed while LTE SL communication is performed.**

The example of FIG. 12 shows an example in which transition between NR SL DRX and NR SL Non-DRX is performed in NR SL during LTE SL Non-DRX.

Referring to FIG. 12, a terminal may perform LTE SL communication in a component carrier (CC 2) and perform NR SL communication in CC1.

In the example of FIG. 12, DRX may not be performed in LTE SL communication. That is, LTE SL communication may be in a Non-DRX state.

While performing NR SL communication, the terminal may perform an NR SL DRX operation, then perform an NR SL Non-DRX operation, and then perform an NR SL DRX operation. While the terminal performs the NR SL DRX operation, the terminal may receive the NR SL signal in On duration.

When the terminal performs transition from NR SL DRX operation to NR SL Non-DRX operation, a transient time of 500 us may be applied. When the terminal performs transition from NR SL DRX operation to NR SL Non-DRX operation, LTE SL communication is affected, so interruption may occur in LTE SL communication.

In addition, when the terminal performs transition from NR SL Non-DRX operation to NR SL DRX operation, a transient time of 500 us may be applied. When the terminal performs transition from NR SL Non-DRX operation to NR SL DRX operation, LTE SL communication is affected, so interruption may occur in LTE SL communication.

For reference, even when transition between active (on duration) and non-active (off duration) is performed in NR SL DRX while the terminal is performing the NR SL DRX operation, interruption may occur in LTE SL communication. To explain the interruption caused by transition between NR SL DRX and NR SL Non-DRX, in FIG. 12, description of interruption according to transition between active (on duration) and non-active (off duration) in NR SL DRX is omitted. Interruption according to transition between active (on duration) and non-active (off duration) in NR SL DRX will be described in detail with reference to FIG. 13 below.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 13** **illustrates an example in which transition between active and non-active is performed in NR SL DRX while LTE SL communication is performed.**

The example of FIG. 13 shows an example in which transition between active and non-active is performed in NR SL DRX during LTE SL Non-DRX.

Referring to FIG. 13, a terminal may perform LTE SL communication in a component carrier (CC 2) and perform NR SL communication in CC1.

In the example of FIG. 13 , DRX may not be performed in LTE SL communication. That is, LTE SL communication may be in a Non-DRX state.

While performing an NR SL DRX operation in NR SL communication, the terminal may perform an active operation, perform a non-active operation, and perform an active operation. The terminal may receive the NR SL signal in an active state. For reference, active operation may mean On duration in the NR SL DRX state, and non-active operation may mean Off duration in the NR SL DRX state.

When the terminal performs transition from active to non-active in NR SL DRX, a transient time of 500 us may be applied. When the terminal performs transition from active to non-active in NR SL DRX, LTE SL communication is affected, so interruption may occur in LTE SL communication.

When the terminal performs transition from non-active to active in NR SL DRX, a transient time of 500 us may be applied. When the terminal performs transition from non-active to active in NR SL DRX, LTE SL communication is affected, so interruption may occur in LTE SL communication.

### ii) When the terminal supports NR SL communication and NR SL communication

When the terminal supports NR SL communication and NR SL communication, various examples of transition related to the NR SL DRX operation of the terminal will be described.

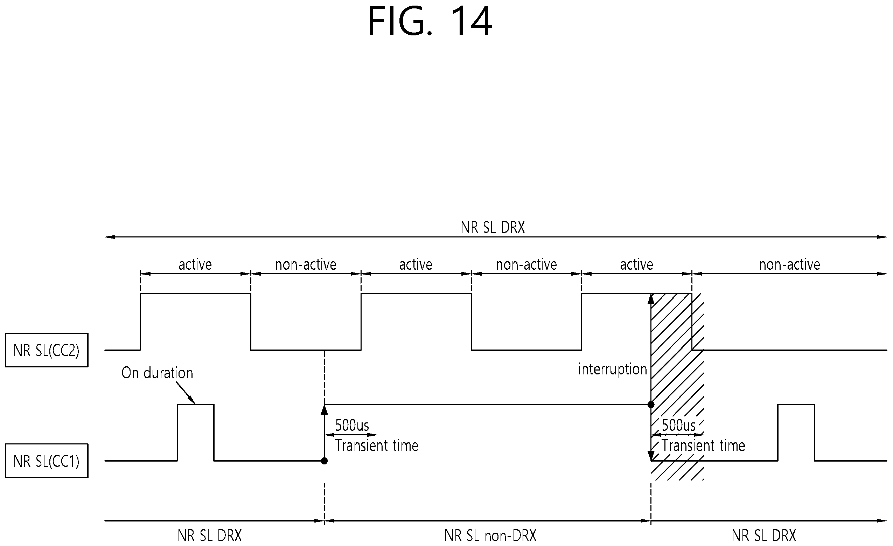

FIG. 14 illustrates an example of a case where a terminal performs transition between NR SL DRX and NR SL Non-DRX in NR SL communication (e.g., Case 1 and Case 2), during the ON duration (active) of NR SL DRX on another carrier.

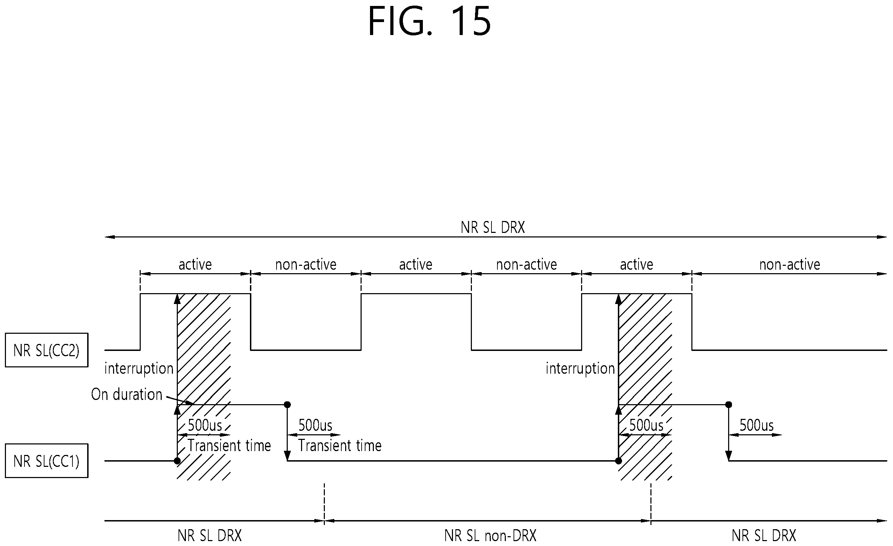

FIG. 15 shows an example of a case (eg Case 3, Case 4) where a terminal performs transition between active and non-active in NR SL DRX during the ON duration (active) of NR SL DRX in another carrier.

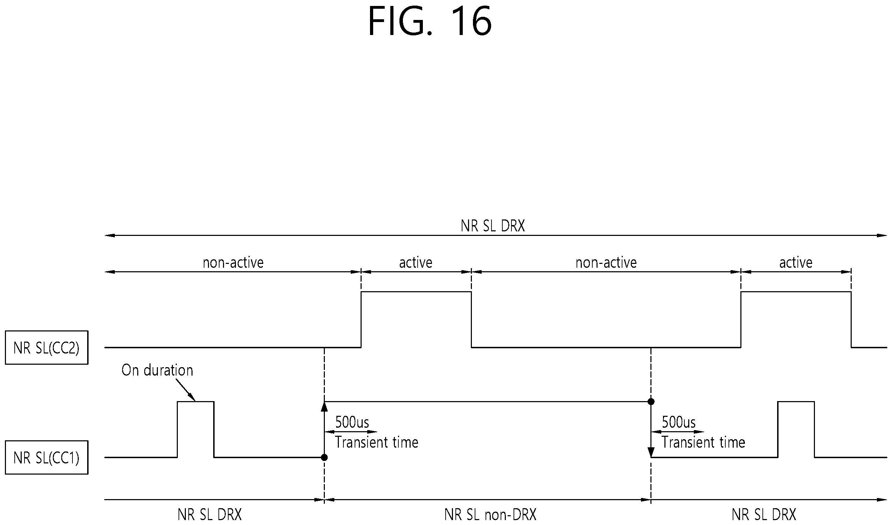

FIG. 16 illustrates an example of a case where the terminal performs transition between NR SL DRX and NR SL Non-DRX in NR SL communication (e.g., Case 1 and Case 2), during Off duration (non-active) of NR SL DRX in another carrier.

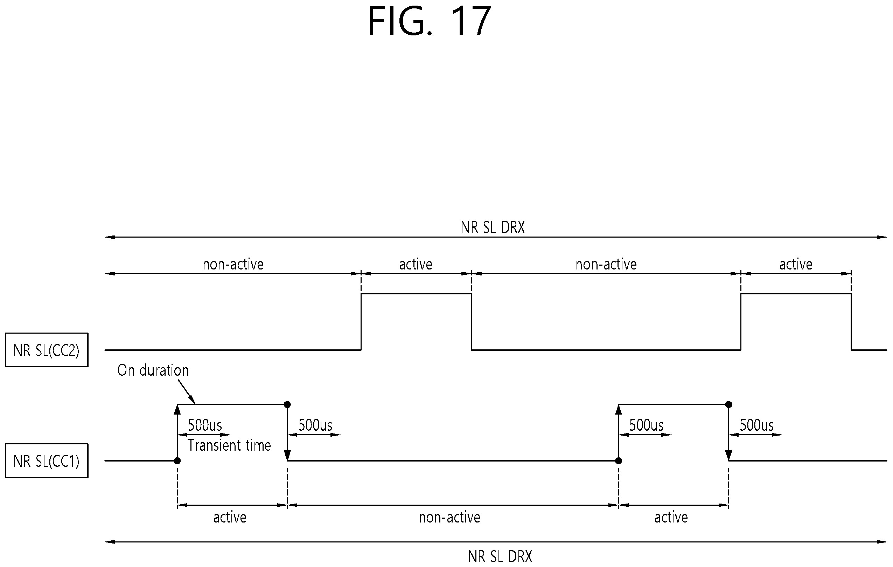

FIG. 17 shows an example of a case where the terminal performs transition between active and non-active in NR SL DRX (eg Case 3, Case 4), during the ON duration (active) of NR SL DRX on another carrier.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 14** **shows an example in which transition between NR SL DRX and NR SL Non-DRX is performed during the ON duration of NR SL DRX in another carrier.**

The example of FIG. 14 shows an example of transition between NR SL DRX and NR SL Non-DRX in NR SL is performed, while the terminal performs NR SL communication in another carrier (eg CC2), and while the terminal is in the On duration (active) state of NR SL DRX on another carrier.

Referring to FIG. 14, a terminal may perform NR SL communication in a component carrier (CC 2) and NR SL communication in CC1.

In the example of FIG. 14, NR SL DRX may be performed in both NR SL communication in CC1 and NR SL communication in CC2. In the example of FIG. 14, while the NR SL DRX is in an On duration (active) state in NR SL communication in CC2, transition between NR SL DRX and NR SL Non-DRX can be performed in NR SL on CC1.

While performing NR SL communication, the terminal may perform an NR SL DRX operation, then perform an NR SL Non-DRX operation, and then perform an NR SL DRX operation. While the terminal performs the NR SL DRX operation, the terminal may receive the NR SL signal in On duration.

When the terminal performs transition from NR SL DRX operation to NR SL Non-DRX operation on CC1, a transient time of 500 us may be applied. When transient time is applied, if NR SL DRX is Off duration (non-active) in CC2, since the terminal does not receive the NR SL signal from CC2, interruption may not be applied.

In addition, when the terminal performs transition from NR SL Non-DRX operation to NR SL DRX operation, a transient time of 500 us may be applied. When transient time is applied, if NR SL DRX in CC2 is in the On duration (active) state, interruption may occur in NR SL communication of CC2.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 15** **shows an example in which transition between active and non-active is performed in NR SL DRX during the ON duration of NR SL DRX in another carrier.**

The example of FIG. 15 shows an example in which transition between active and non-active is performed in NR SL DRX, while the terminal performs NR SL communication in another carrier (eg CC2) and NR SL DRX is in an On duration (active) state in the other carrier.

Referring to FIG. 15, a terminal may perform NR SL communication in a component carrier (CC 2) and NR SL communication in CC1.

In the example of FIG. 15 , NR SL DRX may be performed in both NR SL communication in CC1 and NR SL communication in CC2. In the example of FIG. 15, while the NR SL DRX is in an On duration (active) state in NR SL communication in CC2, transition between NR SL DRX active and non-active may be performed in NR SL on CC1.

While performing NR SL communication, the terminal may perform an NR SL DRX active operation, then perform a non-active operation, and then perform an active operation. The terminal may receive the NR SL signal in an active state.

When the terminal performs transition from active to non-active in NR SL DRX, a transient time of 500 us may be applied. When transient time is applied, if NR SL DRX is Off duration (non-active) in CC2, since the terminal does not receive the NR SL signal from CC2, interruption may not be applied.

When the terminal performs transition from non-active to active in NR SL DRX, a transient time of 500 us may be applied. When transient time is applied, if NR SL DRX in CC2 is in the On duration (active) state, interruption may occur in NR SL communication of CC2.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 16** **shows an example in which transition between NR SL DRX and NR SL Non-DRX is performed during the off duration of NR SL DRX in another carrier.**

The example of FIG. 16 shows an example in which transition between NR SL DRX and NR SL Non-DRX is performed in NR SL, while the terminal performs NR SL communication on another carrier (eg CC2) and the NR SL DRX on the other carrier is Off duration (non-active).

Referring to FIG. 16, a terminal may perform NR SL communication in a component carrier (CC 2) and NR SL communication in CC1.

In the example of FIG. 16, NR SL DRX may be performed in both NR SL communication in CC1 and NR SL communication in CC2. In the example of FIG. 16, transition between NR SL DRX and NR SL Non-DRX can be performed in NR SL on CC1, while NR SL DRX is Off duration (non-active) in NR SL communication in CC2.

While performing NR SL communication, the terminal may perform an NR SL DRX operation, then perform an NR SL Non-DRX operation, and then perform an NR SL DRX operation. While the terminal performs the NR SL DRX operation, the terminal may receive the NR SL signal in On duration.

When the terminal performs transition from NR SL DRX operation to NR SL Non-DRX operation on CC1, a transient time of 500 us may be applied. When transient time is applied, if NR SL DRX is Off duration (non-active) in CC2, interruption may not be applied because the terminal does not receive the NR SL signal in CC2.

In addition, when the terminal performs transition from NR SL Non-DRX operation to NR SL DRX operation, a transient time of 500 us may be applied. When transient time is applied, if NR SL DRX is Off duration (non-active) in CC2, interruption may not be applied because the terminal does not receive the NR SL signal in CC2.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 17** **shows an example in which transition between active and non-active is performed in NR SL DRX during the off duration of NR SL DRX in another carrier.**

The example of FIG. 17 shows an example in which transition between active and non-active is performed in NR SL DRX, while the terminal performs NR SL communication on another carrier (eg CC2) and the NR SL DRX on the other carrier is Off duration (non-active).

Referring to FIG. 17, a terminal may perform NR SL communication in a component carrier (CC 2) and NR SL communication in CC1.

In the example of FIG. 17, NR SL DRX may be performed in both NR SL communication in CC1 and NR SL communication in CC2. In the example of FIG. 17, transition between NR SL DRX active and non-active can be performed in NR SL on CC1 while the NR SL DRX is off duration (non-active) in NR SL communication in CC2.

While performing NR SL communication, the terminal may perform an NR SL DRX active operation, then perform a non-active operation, and then perform an active operation. The terminal may receive the NR SL signal in an active state.

When the terminal performs transition from active to non-active in NR SL DRX operation on CC1, a transient time of 500 us may be applied. When transient time is applied, if NR SL DRX is Off duration (non-active) in CC2, interruption may not be applied because the terminal does not receive the NR SL signal in CC2.

When the terminal performs transition from non-active to active in NR SL DRX on CC1, a transient time of 500 us may be applied. When transient time is applied, if NR SL DRX is Off duration (non-active) in CC2, interruption may not be applied because the terminal does not receive the NR SL signal in CC2.

### A) Interruption in LTE SL due to NR SL DRX

Hereinafter, interruption in LTE SL due to NR SL DRX will be described in detail. For example, as described in the example of FIG. 12 and the example of FIG. 13, a proposal for a case where an interruption occurs in LTE SL will be described. For example, in the following, in the case of NR SL + LTE SL (when the terminal supports both NR SL communication and LTE SL communication), a proposal for LTE SL interruption due to NR SL DRX will be described.

At the time when transitions according to Case 1, Case 2, Case 3, and Case 4 are performed, an interruption may occur in the LTE SL.

It is necessary to define the interruption length (the number of sub-frames) for each case so that LTE SL scheduling can be efficiently performed in consideration of interruptions that may occur in LTE SL.

For example, in terms of Radio Frequency (RF) implementation, let's assume that the transient time is 500us. Based on these assumptions, for cases where LTE SL and NR SL are synchronized (i.e., synchronized) and a-synchronized (i.e., unsynchronized), the number of interrupted sub-frames (e.g., integer X) is suggested as shown in Table 5.

**[Table 5]**

| LTE SL Sub-frame length (ms) | Interruption length X (sub-frame) | |
|---|---|---|
| | Sync | Async |
| 1 | 1 | 2 |

The example of Table 5 shows interruption length X when an interruption occurs in LTE SL communication according to the transition according to the examples of Case 1, Case 2, Case 3, and Case 4 above.

In the example of Table 5, Sync means a case in which the timing (e.g., transmission timing and/or reception timing) of LTE SL communication is synchronized with the timing (e.g., transmission timing and/or reception timing) of NR SL communication. Async means a case where the timing (e.g., transmission timing and/or reception timing) of LTE SL communication is not synchronized with the timing (e.g., transmission timing and/or reception timing) of NR SL communication.

According to the example of Table 5, when LTE SL and NR SL are synchronized, the interrupted length of LTE SL communication may be 1 subframe. When LTE SL and NR SL are not synchronized, the interrupted length of LTE SL communication may be 2 subframes.

The example in Table 5 includes suggested values according to the following process.

In case of Synchronization (that is, when LTE SL and NR SL are synchronized),
- Number of interrupted sub-frames = ceil(500us/1ms) = 1

In case of Asynchronization (that is, when LTE SL and NR SL are not synchronized),
- Number of interrupted sub-frames = Number of interrupted sub-frames of synchronization + 1 sub-frame = 2.

If NR SL Tx timing and LTE SL Tx timing are the same (e.g. LTE SL and NR SL are synchronized), it is proposed that interruption of LTE SL Tx 1 sub-frame or LTE SL Rx 1 sub-frame is applied due to NR SL DRX.

If NR SL Tx timing and LTE SL Tx timing are not the same (e.g. LTE SL and NR SL are not synchronized), it is proposed that interruption of LTE SL Tx 2 sub-frame or LTE SL Rx 2 sub-frame is applied due to NR SL DRX.

Due to the NR SL DRX operation, interruption may occur or increase in LTE SL communication. Interruption may cause performance degradation in LTE SL communication. Therefore, a method for guaranteeing LTE SL performance is required. Hereinafter, a method for guaranteeing performance of LTE SL communication by minimizing interruption in LTE communication will be described through various examples.

As an example, a method of adjusting the transition time(e.g. between active and non-active or between NR SL DRX and NR SL Non-DRX) of NR SL DRX according to the priority of LTE SL communication and the priority of NR SL communication is proposed. For reference, the terminal may receive information about the priority of NR SL communication and the priority of LTE SL communication from a network (e.g., base station). Then, the terminal can determine whether the priority of LTE SL communication is higher than the priority of NR SL communication.

For example, if the priority of LTE SL is high, it is proposed to apply the off time or inactive time of NR SL DRX to a section without LTE SL Tx / Rx resource. Here, the off time of NR SL DRX may mean a time when the terminal performs transition from NR SL DRX operation to NR SL non-DRX operation. Similarly, the inactive time of NR SL DRX may mean a time when the terminal performs transition from active operation to inactive operation in NR SL DRX.

For example, the off time or deactivation time of NR SL DRX may be n slot (ie, n th slot). If there is LTE SL Tx/Rx in n slot according to the LTE SL resource pool configuration (e.g., if LTE SL TX/RX resource is scheduled in n slot), the terminal may not immediately apply Off or deactivation of the NR SL DRX originally configured (e.g., configured according to the NR SL DRX configuration). And, the terminal continues to maintain the DRX On duration, when reaching a time section where the LTE SL Tx/Rx configuration is not applied, for example, n+K slot (K>=1), the terminal may apply Off or deactivation of NR SL DRX.

Here, it is suggested that the On or activation time of NR SL DRX be applied immediately as originally set to ensure the operation of SL DRX. For example, even if the LTE SL Tx/Rx resource is scheduled for n slots at the time of NR SL DRX On or activation, the terminal can apply NR SL DRX On or activation. And, if the LTE SL Tx/Rx resource is scheduled in n slot, which is the off or deactivation time of NR SL DRX, the terminal may not immediately apply Off or deactivation of NR SL DRX. And, the terminal continues to maintain the DRX On duration, when reaching a period to which LTE SL Tx/Rx configuration is not applied, for example, n+K slot (K>=1), the terminal may apply Off or deactivation of NR SL DRX.

In this case, it is proposed that the terminal informs the network of information about n+K slots to which off or deactivation of NR SL DRX is actually applied, or assist information related thereto. This can help the network efficiently operate the actual SL resource.

In addition, when the priority of LTE SL is high, it is proposed to apply the off or inactive time of NR SL DRX by avoiding the sensing window period for LTE SL Tx.

For example, the off or deactivation time of NR SL DRX may be n slot (ie, n th slot). If there is an LTE SL Sensing Window section in n slot, the terminal may not immediately apply Off or deactivation of the NR SL DRX originally configured (e.g., configured according to the NR SL DRX configuration). Here, the sensing window section may mean a time interval for checking whether another terminal is transmitting an SL signal by using transmission resources first, for transmission resources (e.g., resources to be used for transmission of the SL signal), before the terminal transmits the SL signal. A terminal may initiate transmission of an SL signal by using a resource in which an SL signal of another terminal is not received within the sensing window period. And, while continuing to maintain the DRX On duration, when reaching a time period after the LTE SL Sensing Window, eg, n+K slot (K>=1), the terminal may apply Off or deactivation of NR SL DRX. According to this, sensing operation for LTE SL Tx can be guaranteed. In this case, it is proposed that the terminal informs the network of information about n+K slots to which off or deactivation of NR SL DRX is actually applied, or assist information related thereto. This can help the network efficiently operate the actual SL resource.

As another example, we propose a method to avoid interruption due to SL DRX in a slot with an important channel and/or signal (e.g., SL SSB: P-SSS, S-SSS, PSBCH, etc.) of LTE SL.

For example, it is proposed to apply the off or inactive timing of NR SL DRX to LTE SL important channels and/or slots without signals. For example, the off time or deactivation time of NR SL DRX may be n slot (ie, n th slot). If there is an LTE SL SSB in n slot (e.g., if LTE SL SSB is scheduled in n slot), the terminal may continue to maintain DRX On duration without immediately applying Off or deactivation of NR SL DRX originally set (e.g., set according to NR SL DRX configuration). And, when reaching an time interval where there is no LTE SL SSB, n+K slot (K>=1), the terminal may apply Off or deactivation of NR SL DRX.

Here, it is suggested that the On or activation time of NR SL DRX be applied immediately as originally set to ensure the operation of SL DRX. For example, even if LTE SL important channels and/or signals are scheduled in n slots at the time of On or activation of NR SL DRX, the terminal can apply On or activation of NR SL DRX. And, if the LTE SL important channel and / or signal is scheduled in n slot, which is the off or deactivation time of NR SL DRX, the terminal may not immediately apply Off or deactivation of NR SL DRX. And, the terminal continues to maintain the DRX On duration, when the LTE SL important channel and / or signal is not applied, for example, n + K slot (K > = 1) is reached, the terminal may apply Off or deactivation of NR SL DRX.

In this case, it is proposed that the terminal informs the network of information about n+K slots to which off or deactivation of NR SL DRX is actually applied, or assist information related thereto. This can help the network efficiently operate the actual SL resource.

As another example, a method of limiting LTE SL interruption by SL DRX to within a specific ratio in a certain period is proposed. Alternatively, it is proposed to apply SL DRX so that LTE SL performance can satisfy a specific value in a certain period. For example, there may be a method of determining the permissible limit of throughput loss of LTE SL. If ACK/NACK is introduced in LTE SL, there may be a method for determining the allowed limit of missed probability of ACK/NACK in LTE SL. For example, NR SL DRX conversion (e.g., transition between active and non-active or transition between NR SL DRX and NR SL Non-DRX) may be restricted, so that the missed probability of ACK/NACK tolerance of LTE SL is met. In the following, specific examples are described.

In the case of Case 1 and Case 2, since the transition occurs once for the first time and does not occur thereafter, there is no need to specify throughput loss or missed probability of ACK/NACK (Acknowledgement/Negative-ACK) of LTE SL due to interruption. For example, when an NR SL DRX operation is performed and then an NR SL Non-DRX operation is performed, transition may not occur until the terminal starts the NR SL DRX operation again. This is the same in the opposite case (e.g., when an NR SL Non-DRX operation is performed and then an NR SL DRX operation is performed).

On the other hand, in Cases 3 and 4, the transition frequency is not small in the SL DRX state. This is because the On duration of SL DRX is periodically repeated. Therefore, LTE SL interruption due to this can increase. This may result in LTE SL communication performance degradation. Therefore, in order to reduce the performance degradation of LTE SL communication, it is necessary to guarantee LTE SL performance by specifying the permissible limit with the miss probability of LTE SL throughput loss or ACK/NACK. A specific example is as follows.

A UE can support both LTE SL communication and NR SL communication. These UEs can perform NR SL DRX operations. When the UE's NR SL communication is in the NR SL DRX state, interruption in LTE due to transition of NR SL DRX (e.g., transition between active and non-active) may be limited by throughput loss or probability of missed ACK/NACK at a ratio as shown in the following example. For example, if the set NR SL DRX cycle is less than Z ms, interruption in LTE due to transition of NR SL DRX (eg transition between active and non-active) can be allowed up to X1% throughput loss or Y1% probability of missed ACK/NACK. In other words, during the time during which LTE SL communication was performed (e.g., 10 seconds), interruption in LTE can be tolerated up to X1% throughput loss or Y1% probability of missed ACK/NACK. For example, if the set NR SL DRX cycle is greater than Z ms, interruption in LTE due to transition of NR SL DRX (eg transition between active and non-active) can be allowed up to X2% throughput loss or Y2% probability of missed ACK/NACK. For reference, each interruption cannot exceed the defined interruption length X in Table 5.

As an example, for the aforementioned X1, Y1, X2, Y2, and Z, the same range as the following example is proposed. X1=1~5, Y1=1~5, X2<1, Y2<1, Z = 320-640. For example, X1 = 1, Y1 = 1, X2 = 0.625, Y2 = 0.625, Z = 640.

Hereinafter, interruption in NR SL due to NR SL DRX will be described in detail. For example, in the case of NR SL + NR SL (when the terminal supports NR SL communication in CC1 and NR SL communication in CC2), hereinafter, a proposal for NR SL interruption due to NR SL DRX on one side will be described. Specifically, when the terminal performs the NR SL DRX operation in CC1 and performs NR SL communication in CC2, the NR SL interruption in CC2 due to the transition of NR SL DRX in CC1 (e.g. transition between active and non-active or between NR SL DRX and NR SL Non-DRX) is described.

Hereinafter, the NR SL interruption will be described with reference to three examples B), C), and D).

### B) When NR SL of CC2 is NR SL Non-DRX, NR SL interruption of CC2 due to NR SL DRX of CC1

Hereinafter, when the NR SL of CC2 is NR SL Non-DRX, the NR SL interruption of CC2 due to the NR SL DRX of CC1 will be described. For example, when NR SL of CC2 is NR SL Non-DRX, when transition of NR SL DRX in CC1 (e.g. transition between active and non-active or transition between NR SL DRX and NR SL Non-DRX) is performed, the NR SL interruption of CC2 is described.

At the time when transitions according to Case 1, Case 2, Case 3 and Case 4 are performed, when the NR SL of CC1 is NR SL DRX, if the NR of CC2 is NR SL Non-DRX (in the examples of FIG. 12 and FIG. 13, LTE SL (CC2) is assumed to be NR SL (CC2)), NR SL interruption of CC2 may occur.

For example, for the cases where CC1 NR SL and CC2 NR SL are synchronized (i.e., synchronized) and a-synchronized (i.e., unsynchronized), the number of NR SL interrupted slots (e.g., integer X) of CC2 is suggested as shown in Table 6. Here, from the RF implementation point of view, the transient time is assumed to be 500us.

**[Table 6]**

| It | NR SL Slot length (ms) | Interruption length X (slots) | |
|---|---|---|---|
| | | Sync | Async |
| 0 | 1 | 1 | 2 |
| 1 | 0.5 | 1 | 2 |
| 2 | 0.25 | 3 | |
| 3 | 0.125 | 5 | |

The example of Table 6 shows the interruption length X when interruption occurs in NR SL communication of CC2 according to the transition according to the examples of Case 1, Case 2, Case 3, and Case 4 above.

In the example of Table 6, Sync means a case in which the timing (e.g., transmission timing and/or reception timing) of NR SL communication of CC1 is synchronized with the timing (e.g., transmission timing and/or reception timing) of NR SL communication of CC2. Async means a case where the timing (e.g., transmission timing and/or reception timing) of NR SL communication of CC1 is not synchronized with the timing (eg transmission timing and/or reception timing) of NR SL communication of CC2.

µ may mean SCS. u = 0 may mean SCS = 15 kHz, u = 1 may mean SCS = 30 kHz, u = 2 may mean SCS = 60 kHz, and u = 3 may mean SCS = 120 kHz.

According to the example of Table 6, when the NR SLs of CC1 and the NR SLs of CC2 are synchronized, when u = 0, 1, the interrupted length of NR SL communication of CC2 may be 1 slot. When u = 2, the interrupted length of NR SL communication of CC2 may be 3 slots. When u = 3, the interrupted length of NR SL communication of CC2 may be 5 slots.

According to the example of Table 6, when the NR SLs of CC1 and the NR SLs of CC2 are not synchronized, when u=0, 1, the interrupted length of the NR SL communication of CC2 may be 2 slots. When u = 2, the interrupted length of NR SL communication of CC2 may be 3 slots. When u = 3, the interrupted length of NR SL communication of CC2 may be 5 slots.

The example in Table 6 includes suggested values according to the following process.

In case of Synchronization (that is, when NR SL of CC1 and NR SL of CC2 are synchronized),

Number of interrupted slots = ceil(500us/[1ms, 500us, 250us, 125us]) = 1, 1, 2, 4 for µ = 0, 1, 2, 3 respectively

In the case of asynchronization (i.e., when the NR SL of CC1 and the NR SL of CC2 are not synchronized),

Number of interrupted slots = Number of interrupted slots in synchronization + 1 slot = 2, 2, 3, 5 for µ = 0, 1, 2, 3 respectively.

In the case of µ = 2, 3 (e.g., when the NR SL Slot length is 0.25 ms or 0.125 ms), the same number of interrupted slots for synchronization and asynchronization is suggested. The reason is that the Cyclic Prefix (CP) lengths are very small, 1. 17us and 0.57us, respectively. Therefore, in the case of synchronization, it is proposed to add 1 slot to the calculated number of interrupted slots. Accordingly, when µ = 2 or 3, the number of interrupted slots for synchronization and asynchronization may be 3 or 5.

In general, in the case of NR SL + NR SL (if the terminal supports both NR SL communication in CC1 and NR SL communication in CC2), it can be assumed that NR SL communication in CC1 and NR SL communication in CC2 are synchronized.

Due to the NR SL DRX operation in CC1, interruption may occur or increase in NR SL communication of CC2. Interruption may cause performance degradation in NR SL communication of CC2. Therefore, a method for guaranteeing performance of NR SL communication of CC2 is required. Below, through various examples, a method for guaranteeing performance of NR SL communication of CC2 by minimizing interruption of NR SL communication of CC2 will be described.

For example, according to the priority of NR SL communication in CC1 and the priority of NR SL communication in CC2, it is proposed a method for adjusting the transition time of NR SL DRX in CC1 (e.g., transition between active and non-active or between NR SL DRX and NR SL Non-DRX). For reference, the terminal may receive information about the priority of NR SL communication in CC1 and the priority of NR SL communication in CC2 from a network (e.g., base station). Then, the terminal can determine whether the priority of NR SL communication in CC1 is higher than the priority of NR SL communication in CC2.

For example, if the priority of NR SL communication in CC1 is higher than that of NR SL communication in CC2, it is proposed to apply the off or inactive time of NR SL DRX in CC1 to a section without NR SL Tx/Rx resource in CC2.

For example, the off time or deactivation time of NR SL DRX in CC1 may be n slot (ie, n th slot). According to the NR SL resource pool configuration in CC2 in n slot, if there is NR SL Tx/Rx in CC2 (e.g., if NR SL TX/RX resource in CC2 is scheduled in n slot), the terminal may not immediately apply Off or deactivation of the NR SL DRX originally configured (e.g., configured according to the NR SL DRX configuration in CC1). And, the terminal continues to maintain the DRX On duration, when reaching a time section where the NR SL Tx/Rx configuration in CC2 is not applied, for example, n+K slot (K>=1), the terminal may apply Off or deactivation of NR SL DRX in CC1.

Here, it is suggested that the On or activation time of NR SL DRX in CC1 be applied immediately as originally set to ensure the operation of SL DRX. For example, even if the NR SL Tx/Rx resource in CC2 is scheduled for n slot, which is the On or activation time of NR SL DRX in CC1, the terminal can apply On or activation of NR SL DRX in CC1. And, if the NR SL Tx/Rx resource in CC2 is scheduled in n slot, which is the off or deactivation time of NR SL DRX in CC1, the terminal may not immediately apply Off or deactivation of NR SL DRX in CC1. And, the terminal continues to maintain the DRX On duration, When reaching a section where the NR SL Tx/Rx configuration in CC2 is not applied, for example, n+K slot (K>=1), the terminal may apply Off or deactivation of NR SL DRX in CC1.

In this case, it is proposed that the terminal informs the network of information about n+K slots to which off or deactivation of NR SL DRX in CC1 is actually applied, or assist information related thereto. This can help the network efficiently operate the actual SL resource.

In addition, if the priority of NR SL communication in CC1 is high, it is proposed to apply the off or inactive timing of NR SL DRX in CC1 by avoiding the sensing window period for NR SL Tx in CC2.

For example, if the off or deactivation time of NR SL DRX in CC1 may be n slot (ie, n th slot). If there is an NR SL Sensing Window section in CC2 in n slot, the terminal may not immediately apply Off or deactivation of the NR SL DRX originally configured (e.g., configured according to the configuration of NR SL DRX in CC1). And, while continuing to maintain the DRX On duration, when reaching the section after the NR SL Sensing Window in CC2, for example, n+K slot (K>=1), the terminal may apply Off or deactivation of NR SL DRX in CC1. According to this, sensing operation for NR SL Tx in CC2 can be guaranteed. In this case, it is proposed that the terminal informs the network of information about n+K slots to which off or deactivation of NR SL DRX is actually applied in CC1, or assist information related thereto. This can help the network efficiently operate the actual SL resource.

As another example, a method to avoid occurrence of interruption due to NR SL DRX in CC1, in a slot with an important channel and / or signal (e.g., PSFCH, sidelink SSB (S-SSB), etc.) of NR SL in CC2.

For example, it is proposed to apply the off or inactive timing of NR SL DRX in CC1 to the NR SL important channel and/or slot without signal in CC2. For example, the off time or deactivation time of NR SL DRX in CC1 may be n slot (ie, n th slot). If there is NR PSFCH or NR SL SSB in CC2 in n slot (e.g., if NR PSFCH or NR SL SSB is scheduled in n slot), the terminal does not immediately apply Off or deactivation of NR SL DRX in CC1 that was originally configured (e.g., set according to the setting of NR SL DRX in CC1), the terminal may maintain DRX On duration continuously. And, when reaching n+K slot (K>=1), a section without NR PSFCH or NR SL SSB, the terminal may apply Off or deactivation of NR SL DRX in CC1.

Here, it is suggested that the On or activation time of NR SL DRX in CC1 be applied immediately as originally set to ensure the operation of SL DRX. For example, even if the NR SL important channel and/or signal in CC2 is scheduled in n slot, which is the On or activation time of NR SL DRX in CC1, the terminal can apply On or activation of NR SL DRX in CC1. And, if the NRSL important channel and / or signal in CC2 is scheduled in n slot, which is the off or deactivation time of NR SL DRX in CC1, the terminal may not immediately apply Off or deactivation of NR SL DRX in CC1. And, while the terminal continues to maintain the DRX On duration, when it reaches a period to which the NR SL important channel and / or signal in CC2 is not applied, for example, n + K slot (K > = 1), the terminal may apply Off or deactivation of NR SL DRX in CC1.

In this case, it is proposed that the terminal informs the network of information about n+K slots to which off or deactivation of NR SL DRX is actually applied in CC1, or assist information related thereto. This can help the network efficiently operate the actual SL resource.

As another example, a method of limiting NR SL interruption in CC2 by NR SL DRX in CC1 to within a specific ratio in a certain period is proposed. Alternatively, it is proposed to apply NR SL DRX in CC1 so that NR SL performance in CC2 can satisfy a specific value in a certain period. For example, there may be a method of determining the permissible limit of throughput loss of NR SL in CC2. Alternatively, there may be a method of determining the allowed limit of missed probability of ACK/NACK of NR SL in CC2. For example, NR SL DRX transition (e.g., between active and non-active or transition between NR SL DRX and NR SL Non-DRX) may be restricted, so that the missed probability of ACK/NACK tolerance of NR SL in CC2 is met. In the following, specific examples are described.

In the case of Case 1 and Case 2, since the transition occurs once for the first time and does not occur thereafter, there is no need to specify throughput loss or missed probability of ACK/NACK of NR SL in CC2 due to interruption. For example, when an NR SL DRX operation is performed in CC1 and then an NR SL Non-DRX operation is performed in CC1, transition may not occur until the terminal starts the NR SL DRX operation again. This is also same for the opposite case (e.g., when an NR SL Non-DRX operation is performed and then an NR SL DRX operation is performed).

On the other hand, in Cases 3 and 4, the transition frequency is not small in the NR SL DRX state in CC1. This is because the On duration of NR SL DRX is periodically repeated in CC1. Therefore, the NR SL interruption in CC2 due to this can increase. This may result in degradation of NR SL communication performance in CC2. Therefore, in order to reduce performance degradation of NR SL communication in CC2, it is necessary to guarantee the NR SL performance in CC2 by specifying an allowable limit in terms of throughput loss of NR SL in CC2 or miss probability for ACK/NACK. A specific example is as follows.

The UE can support both NR SL communication on CC2 and NR SL communication on CC1. This UE can perform NR SL DRX operation in CC2. NR SL communication of the UE may be in NR SL non-DRX state in CC2 and NR SL DRX state in CC1. In this case, the interruption of NR in CC2 according to the transition of NR SL DRX in CC1 (e.g. transition between active and non-active) can be limited by throughput loss or probability of missed ACK/NACK of the ratio as in the following example. For example, if the NR SL DRX cycle is less than Z ms in the set CC1, interruption of NR in CC2 due to transition of NR SL DRX in CC1 (eg transition between active and non-active) can be allowed up to X1% throughput loss or Y1% probability of missed ACK/NACK. In other words, during the time during which NR SL communication in CC2 was performed (e.g., 10 seconds), interruption in CC2 may be allowed up to X1% throughput loss or Y1% probability of missed ACK/NACK. For example, if the NR SL DRX cycle is greater than Z ms in the set CC1, interruption of NR in CC2 due to transition of NR SL DRX in CC1 (eg transition between active and non-active) can be allowed up to X2% throughput loss or Y2% probability of missed ACK/NACK. For reference, each interruption cannot exceed the defined interruption length X in Table 6.

As an example, for the aforementioned X1, Y1, X2, Y2, and Z, the same range as the following example is proposed. X1=1~5, Y1=1~5, X2<1, Y2<1, Z = 320-640. For example, X1 = 1, Y1 = 1, X2 = 0.625, Y2 = 0.625, Z = 640.

### C) When NR SL DRX of CC2 is on duration, NR SL interruption of CC2 due to NR SL DRX of CC1

Hereinafter, when the NR SL DRX of CC2 is in an On duration interval, the NR SL interruption of CC2 due to the NR SL DRX of CC1 will be described. For example, when NR SL DRX of CC2 is an On duration section, when transition of NR SL DRX in CC1 (e.g. transition between active and non-active or transition between NR SL DRX and NR SL Non-DRX) is performed, the NR SL interruption of CC2 is described.

At the time when transitions according to Case 1, Case 2, Case 3 and Case 4 are performed, when the NR SL of CC1 is NR SL DRX and the NR SL DRX of CC2 is an On duration interval (see the examples of FIG. 14 and FIG. 15), NR SL interruption of CC2 may occur.

For example, in the NR SL DRX on duration (active) section of CC2, the number of NR SL interrupted slots (e.g., integer X) may be proposed as in the example of Table 6 described above, for the case where CC1 NR SL and CC2 NR SL are synchronized (i.e., synchronized) and asynchronized (i.e., unsynchronized).

In general, in the case of NR SL + NR SL (if the terminal supports both NR SL communication in CC1 and NR SL communication in CC2), it can be assumed that NR SL communication in CC1 and NR SL communication in CC2 are synchronized.

Due to the NR SL DRX operation in CC1, interruption may occur or increase in NR SL communication of CC2. Interruption may cause performance degradation in NR SL communication of CC2. Therefore, a method for guaranteeing performance of NR SL communication of CC2 is required. Below, through various examples, a method for guaranteeing performance of NR SL communication of CC2 by minimizing interruption of NR SL communication of CC2 will be described.

For example, according to the priority of NR SL communication in CC1 and the priority of NR SL communication in CC2, it is proposed a method for adjusting the transition time of NR SL DRX in CC1 (e.g., transition between active and non-active or between NR SL DRX and NR SL Non-DRX). For reference, the terminal may receive information about the priority of NR SL communication in CC1 and the priority of NR SL communication in CC2 from a network (e.g., base station). Then, the terminal can determine whether the priority of NR SL communication in CC1 is higher than the priority of NR SL communication in CC2.

For example, if the priority of NR SL communication in CC1 is higher than that of NR SL communication in CC2, it is proposed to apply the off or inactive time of NR SL DRX in CC1 to a section without NR SL Tx/Rx resource in CC2.

For example, the off time or deactivation time of NR SL DRX in CC1 may be n slot (ie, n th slot). According to the NR SL resource pool configuration in CC2 in n slot, if there is NR SL Tx/Rx in CC2 (e.g., if NR SL TX/RX resource in CC2 is scheduled in n slot), the terminal may not immediately apply Off or deactivation of the NR SL DRX originally configured (e.g., configured according to the NR SL DRX configuration in CC1). And, the terminal continues to maintain the DRX On duration, when reaching a time section where the NR SL Tx/Rx configuration in CC2 is not applied, for example, n+K slot (K>=1), the terminal may apply Off or deactivation of NR SL DRX in CC1.

Here, it is suggested that the On or activation time of NR SL DRX in CC1 be applied immediately as originally set to ensure the operation of SL DRX. For example, even if the NR SL Tx/Rx resource in CC2 is scheduled for n slot, which is the On or activation time of NR SL DRX in CC1, the terminal can apply On or activation of NR SL DRX in CC1. And, if the NR SL Tx/Rx resource in CC2 is scheduled in n slot, which is the off or deactivation time of NR SL DRX in CC1, the terminal may not immediately apply Off or deactivation of NR SL DRX in CC1. And, the terminal continues to maintain the DRX On duration, When reaching a section where the NR SL Tx/Rx configuration in CC2 is not applied, for example, n+K slot (K>=1), the terminal may apply Off or deactivation of NR SL DRX in CC1.

In this case, it is proposed that the terminal informs the network of information about n+K slots to which off or deactivation of NR SL DRX in CC1 is actually applied, or assist information related thereto. This can help the network efficiently operate the actual SL resource.

In addition, if the priority of NR SL communication in CC1 is high, it is proposed to apply the off or inactive timing of NR SL DRX in CC1 by avoiding the sensing window period for NR SL Tx in CC2.

For example, if the off or deactivation time of NR SL DRX in CC1 may be n slot (ie, n th slot). If there is an NR SL Sensing Window section in CC2 in n slot, the terminal may not immediately apply Off or deactivation of the NR SL DRX originally configured (e.g., configured according to the configuration of NR SL DRX in CC1). And, while continuing to maintain the DRX On duration, when reaching the section after the NR SL Sensing Window in CC2, for example, n+K slot (K>=1), the terminal may apply Off or deactivation of NR SL DRX in CC1. According to this, sensing operation for NR SL Tx in CC2 can be guaranteed. In this case, it is proposed that the terminal informs the network of information about n+K slots to which off or deactivation of NR SL DRX is actually applied in CC1, or assist information related thereto. This can help the network efficiently operate the actual SL resource.

As another example, a method to avoid occurrence of interruption due to NR SL DRX in CC1, in a slot with an important channel and / or signal (e.g., PSFCH, sidelink SSB (S-SSB), etc.) of NR SL in CC2.

For example, it is proposed to apply the off or inactive timing of NR SL DRX in CC1 to the NR SL important channel and/or slot without signal in CC2. For example, the off time or deactivation time of NR SL DRX in CC1 may be n slot (ie, n th slot). If there is NR PSFCH or NR SL SSB in CC2 in n slot (e.g., if NR PSFCH or NR SL SSB is scheduled in n slot), the terminal does not immediately apply Off or deactivation of NR SL DRX in CC1 that was originally configured (e.g., set according to the setting of NR SL DRX in CC1), the terminal may maintain DRX On duration continuously. And, when reaching n+K slot (K>=1), a section without NR PSFCH or NR SL SSB, the terminal may apply Off or deactivation of NR SL DRX in CC1.

Here, it is suggested that the On or activation time of NR SL DRX in CC1 be applied immediately as originally set to ensure the operation of SL DRX. For example, even if the NR SL important channel and/or signal in CC2 is scheduled in n slot, which is the On or activation time of NR SL DRX in CC1, the terminal can apply On or activation of NR SL DRX in CC1. And, if the NRSL important channel and / or signal in CC2 is scheduled in n slot, which is the off or deactivation time of NR SL DRX in CC1, the terminal may not immediately apply Off or deactivation of NR SL DRX in CC1. And, while the terminal continues to maintain the DRX On duration, when it reaches a period to which the NR SL important channel and / or signal in CC2 is not applied, for example, n + K slot (K > = 1), the terminal may apply Off or deactivation of NR SL DRX in CC 1.

In this case, it is proposed that the terminal informs the network of information about n+K slots to which off or deactivation of NR SL DRX is actually applied in CC1, or assist information related thereto. This can help the network efficiently operate the actual SL resource.

As another example, a method of limiting NR SL interruption in CC2 by NR SL DRX in CC1 to within a specific ratio in a certain period is proposed. Alternatively, it is proposed to apply NR SL DRX in CC1 so that NR SL performance in CC2 can satisfy a specific value in a certain period. For example, there may be a method of determining the permissible limit of throughput loss of NR SL in CC2. Alternatively, there may be a method of determining the allowed limit of missed probability of ACK/NACK of NR SL in CC2. For example, NR SL DRX transition (e.g., between active and non-active or transition between NR SL DRX and NR SL Non-DRX) may be restricted, so that the missed probability of ACK/NACK tolerance of NR SL in CC2 is met. In the following, specific examples are described.

In the case of Case 1 and Case 2, since the transition occurs once for the first time and does not occur thereafter, there is no need to specify throughput loss or missed probability of ACK/NACK of NR SL in CC2 due to interruption. For example, when an NR SL DRX operation is performed in CC1 and then an NR SL Non-DRX operation is performed in CC1, transition may not occur until the terminal starts the NR SL DRX operation again. This is also same for the opposite case (e.g., when an NR SL Non-DRX operation is performed and then an NR SL DRX operation is performed).

On the other hand, in Cases 3 and 4, the transition frequency is not small in the NR SL DRX state in CC1. This is because the On duration of NR SL DRX is periodically repeated in CC1. Therefore, the NR SL interruption in CC2 due to this can increase. This may result in degradation of NR SL communication performance in CC2. Therefore, in order to reduce performance degradation of NR SL communication in CC2, it is necessary to guarantee the NR SL performance in CC2 by specifying an allowable limit in terms of throughput loss of NR SL in CC2 or miss probability for ACK/NACK. A specific example is as follows.

The UE can support both NR SL communication on CC2 and NR SL communication on CC1. This UE can perform NR SL DRX operation in CC2. NR SL communication of the UE may be in NR SL non-DRX state in CC2 and NR SL DRX state in CC1. In this case, the interruption of NR in CC2 according to the transition of NR SL DRX in CC1 (e.g. transition between active and non-active) can be limited by throughput loss or probability of missed ACK/NACK of the ratio as in the following example. For example, if the NR SL DRX cycle is less than Z ms in the set CC1, interruption of NR in CC2 due to transition of NR SL DRX in CC1 (eg transition between active and non-active) can be allowed up to X1% throughput loss or Y1% probability of missed ACK/NACK. In other words, during the time during which NR SL communication in CC2 was performed (e.g., 10 seconds), interruption in CC2 may be allowed up to X1% throughput loss or Y1% probability of missed ACK/NACK. For example, if the NR SL DRX cycle is greater than Z ms in the set CC1, interruption of NR in CC2 due to transition of NR SL DRX in CC1 (eg transition between active and non-active) can be allowed up to X2% throughput loss or Y2% probability of missed ACK/NACK. For reference, each interruption cannot exceed the defined interruption length X in Table 6.

As an example, for the aforementioned X1, Y1, X2, Y2, and Z, the same range as the following example is proposed. X1=1~5, Y1=1~5, X2<1, Y2<1, Z = 320-640. For example, X1 = 1, Y1 = 1, X2 = 0.625, Y2 = 0.625, Z = 640.

### D) When NR SL DRX of CC2 is off duration, NR SL interruption of CC2 due to NR SL DRX of CC1

Hereinafter, when the NR SL DRX of CC2 is off duration (non-active), the NR SL DRX of CC2 due to the NR SL DRX of CC1 will be described. For example, when the NR SL DRX of CC2 is an Off duration interval, when transition of NR SL DRX in CC1 (e.g. transition between active and non-active or transition between NR SL DRX and NR SL Non-DRX) is performed, the NR SL interruption of CC2 is described.

When transitions according to Case1, Case2, Case3, and Cased are performed, when NR SL of CC1 is NR SL DRX, if the NR SL DRX of CC2 is an Off duration interval (see the example of FIG. 16 and the example of FIG. 17), the NR SL interruption of CC2 does not occur.

To prevent CC2 NR SL interruption from occurring, when CC1 NR SL is NR SL DRX and CC2 NR SL is NR SL DRX, NR SL DRX-related transitions for each CC (e.g., transition between active and non-active or transition between NR SL DRX and NR SL Non-DRX) may be set to occur only during the other party's NR SL DRX off duration (non-active). This setting may be performed by the network or by pre-configuration. Alternatively, in this case, no interruption may be suggested as follows.

For NR SLs for CC1 and CC2 (or multiple CCs), when NR SL DRX is applied, interruption on NR SL is not allowed.

This may include a method of equally applying the NR SL DRX configuration for the NR SL DRX of CC1 and the NR SL DRX of CC2. For example, for both NR SL DRX of CC1 and NR SL DRX of CC2, NR SL DRX-related transitions for each CC (e.g., transition between active and non-active or transition between NR SL DRX and NR SL Non-DRX) may be set to occur only during the other party's NR SL DRX off duration (non-active).

### 2. The second example of the disclosure of the present specification

In the second example of the disclosure of the present specification, an example of a case in which a terminal configures NR SL DRX configuration by a pre-configuration method will be described with reference to various examples.

For reference, the contents of the first example of the disclosure of the present specification may be applied to the second example of the disclosure of the present specification. Hereinafter, the second example of the disclosure of the present specification will be described centering on the difference between the second example of the disclosure of the present specification and the first example of the disclosure of the present specification.

When the terminal sets the NR SL DRX configuration by the pre-configuration method, the terminal can switch from NR SL to NR SL Non-DRX to NR SL DRX. The terminal may perform active (on-duration) and non-active (off-duration) operations in the switched NR SL DRX state. For reference, NR SL Non-DRX may mean a state in which the NR SL DRX operation is not performed when the terminal performs NR SL communication.

For reference, a terminal supporting both LTE SL and NR SL may be implemented based on LTE SL and NR SL with individual chips, or may be implemented based on both LTE SL and NR SL with a single chip.

When implemented as a single chip, transient effects may occur in Case1, Case2, Case3, and Case4, as described above in the first example of the disclosure of the present specification.

First, the case of LTE SL (CC2) + NR SL (CC1) (when the terminal supports both NR SL communication and LTE SL communication) will be described first.

In the case of LTE SL (CC2) + NR SL (CC1) (when the terminal supports both NR SL communication and LTE SL communication), interruption may occur in LTE SL due to transient effects. For LTE SL interruption due to NR SL DRX, it is proposed that the same method as "A) interruption in LTE SL due to NR SL DRX" of the first example of the disclosure of the present specification described above.

In addition, it is proposed that the terminal performs an operations to inform the network (in-coverage base station) of pre-configured SL DRX information, and the n + K slot information described in "A) Interruption in LTE SL due to NR SL DRX" of the first example of the disclosure of the present specification (e.g., n + K slot to which the terminal actually applied Off or deactivation of NR SL DRX information), or related assist information. It is proposed that the network to inform terminals in in-coverage of information such as this example or SL DRX information updated based on this information through the SIB. This can help the network efficiently operate the actual SL resource.

Or, based on the modem implementation of the terminal, it is proposed that the terminal may transfer pre-configured SL DRX information and n+K slot information described in "A) interruption in LTE SL due to NR SL DRX" of the first example of the disclosure of the present specification; or related assist information to LTE SL (e.g., using this information when the same terminal performs LTE SL communication), to enable efficient operation of LTE SL resources. It is proposed that the terminal updates LTE SL resource pool information based on pre-configured SL DRX information, n + K slot information described in "A) interruption in LTE SL due to NR SL DRX" of the first example of the disclosure of the present specification, or related assist information.

And, the case of NR SL(CC2) + NR SL(CC1) (when the terminal supports both NR SL communication in CC1 and NR SL communication in CC) will be described first.

In the case of LTE SL (CC2) + NR SL (CC1) (when the terminal supports both NR SL communication and LTE SL communication), interruption may occur in NR SL in CC2 due to transient effects caused by NR DRX operation in CC1. For NR SL interruption in CC2 due to NR SL DRX in CC1, the same method as "B), C), and D) of the first example of the disclosure of the present specification described above is proposed.

In addition, it is proposed that the terminal performs operations such that the terminal informs the network (in-coverage base station) of pre-configured SL DRX information, and n + K slot information described in "B) and C)" of the first example of the disclosure of the present specification (e.g., information on n + K slots to which the terminal actually applied off or deactivation of NR SL DRX in CC1), or related assist information. It is proposed that the network informs terminals in in-coverage of information such as this example or NR SL DRX information in CC1 updated using this information through SIB. This can help the network efficiently operate the NR SL resource in the actual CC2.

Or, based on the modem implementation of the terminal, it is proposed to efficiently operate NR SL resources in CC2, by the operations that the terminal delivers pre-configured SL DRX information in CC1 and n+K slot information described in "B) and C)" of the first example of the disclosure of the present specification, or the related assist information to the NR SL in CC2. It is also proposed that the terminal updates NR SL resource pool information in CC2, based on Pre-configured SL DRX information in CC1, n + K slot information described in "B) and C)" of the first example of the disclosure of the present specification, or related assist information,

### 3. Third example of disclosure of the present specification

A third example of the disclosure of the present specification describes a method in which a terminal informs a network of capability information. For example, the third example of the disclosure of the present specification describes a method in which the terminal informs the network of capability information when the first example and/or the second example of the disclosure of the present specification described above are applied..

In the first example and/or the second example of the disclosure of the present specification described above, the following description may be applied.

In the case of a terminal supporting LTE SL + NR SL (when the terminal supports both NR SL communication and LTE SL communication), as a way to minimize LTE SL interruption caused by NR SL DRX, it is also proposed to inform the network of the capability bit about whether the terminal is implemented as an individual chip or a single chip. If, for example, the network knows that LTE SL and NR SL are implemented as individual chips in the terminal, respectively, the network may operate without considering LTE SL interruption due to NR SL DRX.

In the case of a terminal supporting NR SL (CC1) + NR SL (CC2) (when the terminal supports NR SL communication in CC1 and NR SL communication in CC2), as a way to minimize CC2 NR SL interruption caused by CC1 NR SL DRX, it is also proposed to inform the network of the implementation capability bit for whether the terminal is implemented as an individual chip or a single chip. If, for example, the network knows that NR SL in CC1 and NR SL in CC2 are implemented as individual chips, respectively, it is not necessary to consider CC2 NR SL interruption due to CC1 NR SL DRX.

The following drawings are made to explain a specific example of the present specification. Since the names of specific devices or names of specific signals/messages/fields described in the drawings are provided as examples, the technical features of the present specification are not limited to the specific names used in the drawings below.

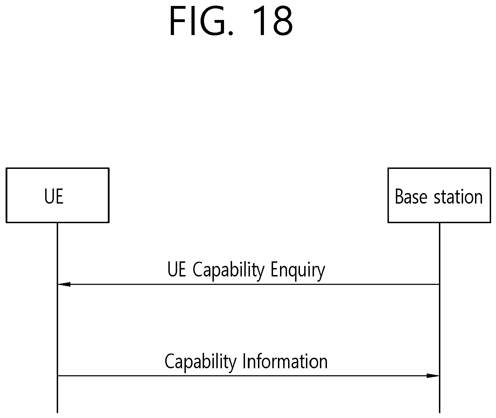

**FIG. 18** **illustrates an example in which a terminal provides capability information according to a third example of the disclosure of the present specification.**

According to the example of FIG. 18, the base station may transmit a message requesting inquiry of UE capability to the terminal (e.g., UE). Then, the terminal may transmit capability information to the base station. For reference, here, an operation of transmitting a message requesting inquiry of UE capability by the base station may be omitted.

As in the example described above, in the case of LTE SL + NR SL or in the case of NR SL (CC1) + NR SL (CC2), the UE may transmit an implementation capability bit indicating whether the UE is implemented based on a separate chip or a single chip to the base station. That is, in the example of FIG. 18, the capability information may include an implementation capability bit for whether it is implemented based on a separate chip or a single chip.

For example, based on the capability information, the base station may know that the terminal is implemented based on an individual chip in the case of LTE SL + NR SL or NR SL (CC1) + NR SL (CC2). In this case, LTE SL interruption or CC2 NR SL interruption may not be considered.

For another example, based on the capability information, the base station can know that the terminal is implemented based on a single chip in the case of LTE SL + NR SL or NR SL (CC1) + NR SL (CC2). In this case, the base station and the terminal may perform SL communication according to the operation in the first example and/or second example of the disclosure of the present specification described above.

### 4. The fourth example of the disclosure of the present specification

In the fourth example of the disclosure of the present specification, interruption in NR Uu (or LTE Uu) due to NR SL DRX is described.

The contents of the first to third examples of the disclosure of the present specification described above may be equally applied to the case of NR SL (CC1) + NR Uu (or LTE Uu) (CC2).

For example, among the contents of the first to third examples of the disclosure of the present specification, the description of the case of NR SL(CC1) + NR SL(CC2) can be equally applied to the case where the terminal supports NR SL communication in CC1 and NR Uu communication in CC2. That is, in the description of the case of NR SL(CC1) + NR SL(CC2), even if CC2 is NR Uu rather than NR SL, it is proposed to apply the same interruption due to NR SL DRX to NR Uu. In other words, the description of NR SL interruption in CC2 due to NR SL DRX in CC1 can be equally applied to NR Uu interruption in CC2.

Specifically, in the case of NR SL (CC1) + NR Uu (CC2), the example of Table 6 may be applied to NR Uu interruption in CC2 due to NR SL DRX in CC1.

In the case of NR SL(CC1) + NR Uu(CC2), for the example of Table 6, whether NR Uu and NR SL are synchronized can be assumed as in the following example.
- In case of SL N_{TAoffset}(=0) & N_{TA,SL}(=0),
   : NR Downlink (DL) Rx can be assumed to be synchronized with NR SL (NR SL Tx timing = NR SL Rx timing = NR DL reception timing), (Example: In the example of Table 6, the interruption length for the synchronized case may be applied to NR DL RX.)
   : based on N_{TAoffset} and N_{TA} (propagation delay) defined in the example of Table 7 (see Table 7.1.2-2 of 3GPP TS38.133 V16.4.0), since the NR UL Tx is transmitted ahead of the NR DL RX timing by N_{TAoffset} + N_{TA}, NR UL Tx can be assumed to be asynchronous with the NR SL. (Example: In the example of Table 6, the interruption length for the case of non-synchronization may be applied to NR UL TX.)
- In the case of SL N_{TAoffset} (see the example in Table 7) & N_{TA,SL} (=N_{TA}),
   : It can be assumed that NR UL Tx is synchronized with NR SL (NR SL Tx timing = NR UL Tx timing) (e.g., interruption length for the case of synchronization in the example of Table 6 can be applied to NR UL TX .)
   : NR DL Rx can be assumed to be asynchronized with NR SL. (Example: In the example of Table 6, the interruption length for the case of non-synchronization may be applied to NR DL RX.)

Here, Table 7 is as the following example.

**[Table 7]**

| Frequency range and band of cell used for uplink transmission | N_{TA offset} (Unit: Tc) |
|---|---|
| FR1 FDD or TDD band with neither E-UTRA-NR nor NB-IoT-NR coexistence case | 25600 (Note 1) |
| FR1 FDD band with E-UTRA-NR and/or NB-IoT-NR coexistence case | 0 (Note 1) |
| FR1 TDD band with E-UTRA-NR and/or NarrowBand-Internet of Things (NB-IoT)-NR coexistence case | 39936 (Note 1) |
| FR2 | 13792 |
| **[401]** The example in Table 7 shows the value of N_{TA offset.} | |

In Table 7, Note 1 and Note 2 are as follows.
Note 1: The UE identifies N_{TA offset} based on the information n-TimingAdvanceOffset as specified in TS 38.331 V16.1.0. If UE is not provided with the information n-TimingAdvanceOffset, the default value of N_{TA offset} is set as 25600 for FR1 band. In case of multiple UL carriers in the same Tracking Area group (TAG), UE expects that the same value of n-TimingAdvanceOffset is provided for all the UL carriers according to clause 4.2 in TS 38.213 V16.1.0 and the value 39936 of *N*_{TAoffset} can also be provided for a FDD serving cell.
Note 2: Tc = 1/(15000*2048*64) second, Ts = 1/(15000*2048) second.

For another example, among the contents of the first to third examples of the disclosure of the present specification, the description of the case of NR SL(CC1) + NR SL(CC2) can be equally applied to the case where the terminal supports NR SL communication in CC1 and LTE Uu communication in CC2. That is, the description of the case of NR SL(CC1) + NR SL(CC2) proposes to apply the same interruption due to NR SL DRX to LTE Uu even when CC2 is LTE Uu rather than NR SL. In other words, the description of NR SL interruption in CC2 due to NR SL DRX in CC1 can be equally applied to LTE Uu interruption in CC2.

Specifically, in the case of NR SL (CC1) + LTE Uu (CC2), the example of Table 5 may be applied to LTE Uu interruption in CC2 due to NR SL DRX in CC1.

In the case of NR SL (CC1) + LTE Uu (CC2), for the example of Table 5, whether LTE Uu and NR SL are synchronized can be assumed as in the following example.
- In case of SL N_{TAoffset}(=0) & N_{TA,SL}(=0),
   : LTE Downlink (DL) Rx can be assumed to be synchronized with NR SL (NR SL Tx timing = NR SL Rx timing = LTE DL reception timing), (Example: In the example of Table 5, the interruption length for the synchronized case may be applied to LTE DL RX.)
   : Based on N_{TAoffset} and N_{TA} (propagation delay) defined in the example of Table 7 (see Table 7.1.2-2 of 3GPP TS38.133 V16.4.0), since the LTE UL Tx is transmitted ahead of the LTE DL RX timing by NTAoffset + NTA, it can be assumed that the LTE UL Tx is asynchronized (non-synchronized, that is, not synchronized) with the NR SL. (Example: In the example of Table 5, the interruption length for the case of non-synchronization may be applied to LTE UL TX.)
- In the case of SL N_{TAoffset} (see the example in Table 7) & N_{TA,SL} (=N_{TA}),
   : LTE UL Tx can be assumed to be synchronized with NR SL (NR SL Tx timing = NR UL Tx timing) (e.g., interruption length for the case of synchronization in the example of Table 5 can be applied to NR UL TX)
   : It can be assumed that LTE DL Rx is asynchronized with NR SL. (Example: In the example of Table 5, the interruption length for the case of non-synchronization may be applied to NR DL RX.)

### 5. Fifth example of the disclosure of the present specification

The contents related to the interruption of the first to fourth examples of the disclosure of the present specification described above may be differently applied according to a combination of a band of CC1 and a band of CC2. In other words, the interruptions proposed in the first to fourth examples of the disclosure of the present specification may be applied differently according to the band combination of LTE SL + NR SL, the combination of NR SL + NR SL bands, or the NR SL + NR Uu (or LTE Uu) band combination.

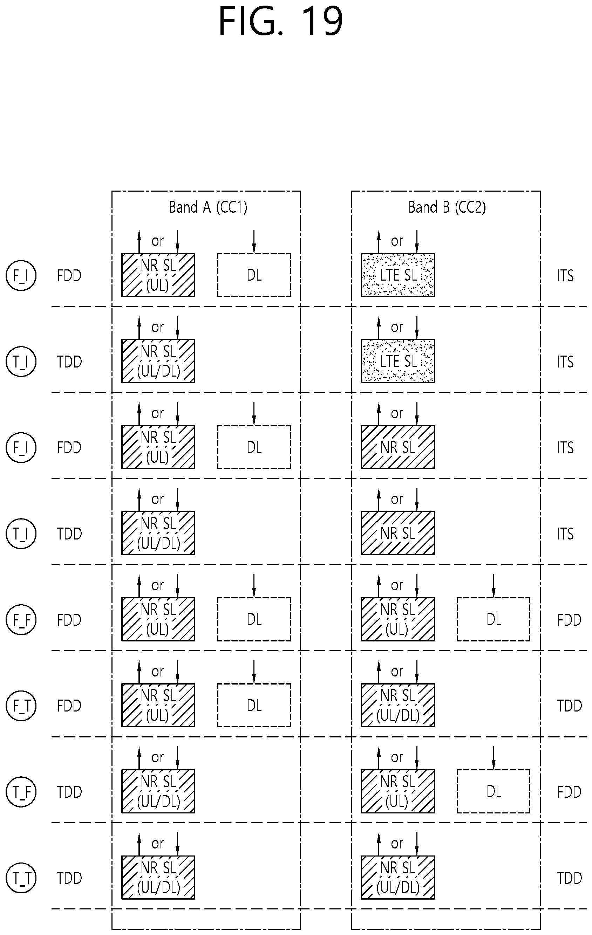

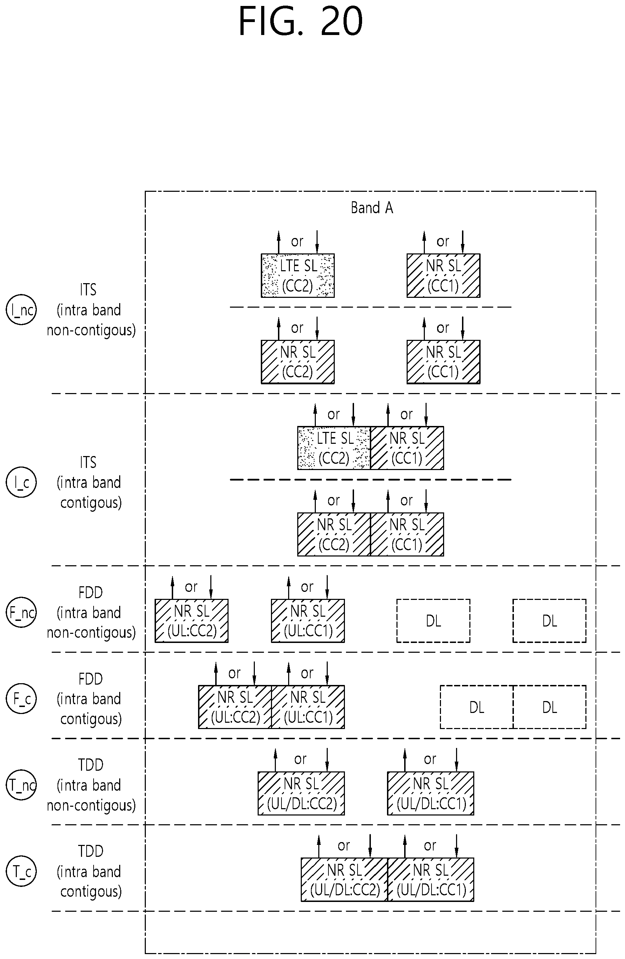

A fifth example of the disclosure of the present specification will be described with reference to FIGS. 19 and 20. FIG. 19 shows an example of inter-band combination, and FIG. 20 shows an example of intra-band combination.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 19** **shows an example of an inter-band combination that can be used in one embodiment of the present disclosure.**

The example of FIG. 19 shows an example of an inter-band combination for NR SL (CC1) + LTE SL (CC2) or NR SL (CC1) + NR SL (CC2).

In the example of FIG. 19, the inter-band combination may include the following example. Here, FDD and TDD may be licensed bands, and Intelligent Transport Systems (ITS) bands may be bands for intelligent transportation system services:
- F_I: NR SL(FDD) + LTE SL(ITS 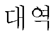 ), NR SL(FDD) + NR SL(ITS band)
- T_I: NR SL(TDD) + LTE SL(ITS 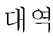 ), NR SL(TDD) + NR SL(ITS band)
- F_F: NR SL(FDD UL) + NR SL(FDD UL)
- F_T: NR SL(FDD UL) + NR SL(TDD)
- T_F: NR SL(TDD) + NR SL(FDD UL)
- T_T: NR SL(TDD) + NR SL(TDD)

In each inter-band combination according to the example of FIG. 19, it is proposed that whether SL transmission in CC1 and SL Reception in CC2 are performed simultaneously, and whether CC2 SL transmission and CC1 SL reception are simultaneously performed are determined according to the presence/absence of SL simultaneous Rx/Tx capability of the UE. CC1 is a component carrier corresponding to NR SL, and CC2 is a component carrier corresponding to NR SL, LTE SL, or NR Uu (or LTE Uu).

For example, if the terminal has SL simultaneous Rx/Tx capability, the terminal can perform simultaneous CC1 SL transmission and CC2 SL reception or simultaneous CC2 SL transmission and CC1 SL reception.

For another example, if the terminal does not have SL simultaneous Rx / Tx capability, simultaneous performance of CC1 SL transmission and CC2 SL reception, or CC2 SL transmission and CC1 SL reception may not be possible. In this case, it may be possible for the terminal to perform either one of the two (ie, SL transmission on either CC1 or CC2) or simultaneous transmission of both (ie, SL transmission on both CC1 and CC2), or, one of the two reception (ie, SL reception on one of CC1 or CC2) or simultaneous reception on both (ie, SL reception on both CC1 and CC2).

The reason why capability for simultaneous transmission/reception is required is as follows. For example, due to signal transmission, there may be a band combination to which interference is applied to the receiver, if the terminal cannot remove this interference, this is because it is necessary for the terminal to perform an NR SL+NR SL, LTE SL+NR SL, or LTE SL+NR Uu (or LTE Uu) operation by applying SL non-simultaneous Rx/Tx capability (e.g., by not performing signal transmission and signal reception at the same time). Conversely, when little interference is applied to the receiver due to signal transmission, or, if the terminal can perform interference cancellation, the terminal may perform simultaneous Rx/Tx operations for NR SL+NR SL, LTE SL+NR SL, or LTE SL+NR Uu (or LTE Uu) by applying SL simultaneous Rx/Tx capability.

In each inter-band combination according to the example of FIG. 19, a terminal with SL simultaneous Rx/Tx capability can simultaneously perform CC1 SL transmission and CC2 SL reception or CC2 SL transmission and CC1 SL reception.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 20** **shows an example of an intra-band combination that can be used in one embodiment of the disclosure of the present specification.**

The example of FIG. 20 shows an example of an intra-band combination for NR SL (CC1) + LTE SL (CC2) or NR SL (CC1) + NR SL (CC2).

In the example of FIG. 20, the intra-band combination may include cases such as the following example.

I_nc: supports LTE SL + NR SL or NR SL + NR SL based on an ITS intra-band non-contiguous carrier.

I_c: Supports LTE SL + NR SL or NR SL + NR SL based on an ITS intra-band contiguous carrier.

F_nc: Supports NR SL + NR SL based on FDD intra-band non-contiguous carrier.

F_c: Supports NR SL + NR SL based on FDD intra-band contiguous carrier.

T_nc: Supports NR SL + NR SL based on TDD intra-band non-contiguous carrier.

T_c: Supports NR SL + NR SL based on TDD intra-band contiguous carrier.

In each inter-band combination according to the example of FIG. 20, it is proposed that whether SL transmission in CC1 and SL Reception in CC2 are performed simultaneously, and whether CC2 SL transmission and CC1 SL reception are simultaneously performed are determined according to the presence/absence of SL simultaneous Rx/Tx capability of the terminal. CC1 is a component carrier corresponding to NR SL, and CC2 is a component carrier corresponding to NR SL, LTE SL, or NR Uu (or LTE Uu).

For example, if the terminal has SL simultaneous Rx/Tx capability, the terminal can perform simultaneous CC1 SL transmission and CC2 SL reception or simultaneous CC2 SL transmission and CC1 SL reception.

For another example, if the terminal does not have SL simultaneous Rx / Tx capability, simultaneous performance of CC1 SL transmission and CC2 SL Reception, or concurrent performance of CC2 SL transmission and CC1 SL reception may not be possible. In this case, the it may be possible for the terminal to transmit either one of the two (ie, SL transmission on either CC1 or CC2) or simultaneous transmission of both (ie, SL transmission on both CC1 and CC2), or, receive either one (i.e., SL reception on either CC1 or CC2) or, simultaneous reception (ie, SL reception in both CC1 and CC2) for both.

Specifically, for examples of intra-band combination according to the example of FIG. 20, the following may be applied:
- In case of I_nc,
   SL simultaneous Rx/Tx is not applied.
- In case of I_c,
   SL simultaneous Rx/Tx is not applied.
- In case of F_nc,
   i) If there is SL simultaneous Rx/Tx capability, simultaneous SL transmission and SL Reception between two CCs are applied.
   ii) If there is no SL simultaneous Rx/Tx capability, simultaneous SL transmission and SL Reception between two CCs cannot be applied.
- In the case of F_c,
   Simultaneous SL transmission and SL Reception between two CCs cannot be applied (regardless of SL simultaneous Rx/Tx capability).
- In case of T_nc,
   Simultaneous SL transmission and SL Reception between two CCs cannot be applied (regardless of SL simultaneous Rx/Tx capability).
- In case of T_c,
   Simultaneous SL transmission and SL Reception between two CCs cannot be applied (regardless of SL simultaneous Rx/Tx capability).

In each intra-band combination according to the example of FIG. 20, the terminal having SL simultaneous Rx/Tx capability can simultaneously perform CC1 SL transmission and CC2 SL reception or CC2 SL transmission and CC1 SL reception. However, this operation is applicable only to intra-band non-contiguous.

In the band combination described in the example of FIG. 19 and the example of FIG. 20, the terminal may support LTE SL + NR SL or NR SL + NR SL in inter-band or intra-band. In this case, if the terminal supports SL Simultaneous Rx/Tx, the interruptions proposed in the first example of the disclosure of the present specification to the third example of the disclosure of the present specification may be applied as they are. This is because there may be CC2 SL Rx or CC2 SL Tx in the CC1 NR SL Rx section where CC1 NR SL DRX occurs (a section in which the terminal performs an operation related to CC1 NR SL DRX). Accordingly, the interruption proposed in the first to third examples of the disclosure of the present specification may be applied as it is to the interruption occurring in the CC2 SL Rx or the CC2 SL RX.

In the band combination described in the example of FIG. 19 and the example of FIG. 20, the terminal may support LTE SL + NR SL or NR SL + NR SL in inter-band or intra-band. In this case, if the terminal does not support SL Simultaneous Rx/Tx, it is proposed that the interruptions proposed in the first to third examples of the disclosure of the present specification are applied only to CC2 SL Rx and not to CC2 SL Tx. This is because only CC2 SL Rx can exist, and CC2 SL TX cannot be performed in the CC1 NR SL Rx period in which CC1 NR SL DRX occurs (a period in which the terminal performs an operation related to CC1 NR SL DRX).

In addition, the NR SL DRX application method as in the following example is also proposed.

As described in the example of FIG. 19 and the example of FIG. 20, in the case where the terminal supports LTE SL + NR SL with inter-band combination or intra-band combination, the following operation is proposed:
- When the priority of LTE SL is higher than that of NR SL, in order not to give interruption to LTE SL,
   i) NR SL DRX is not applied; or,
   ii) A method of applying NR SL DRX only in a section without LTE SL Tx or a section without LTE SL Rx.
- If the priority of NR SL is higher than that of LTE SL,
   A method of applying NR SL DRX regardless of the LTE SL Tx section or the LTE SL Rx section.
- Or, if the priorities of NR SL and LTE SL are not defined, or if the priority order of NR SL is the same as that of LTE SL,
   ii) A method of applying NR SL DRX only in a section without LTE SL Tx or a section without LTE SL Rx.
   ii) A method of applying NR SL DRX only in a section without LTE SL Tx or a section without LTE SL Rx.
- or, regardless of priority,
   i) a method of applying NR SL DRX regardless of the LTE SL Tx section or the LTE SL Rx section; or,
   ii) A method of applying NR SL DRX only in a section without LTE SL Tx or a section without LTE SL Rx.

As described in the examples of FIG. 19 and FIG. 20, in the case where the terminal supports NR SL (CC1) + NR SL (CC2) in inter-band combination or intra-band combination, the following operation is proposed. :
- When the priority of the CC2 NR SL is higher than that of the CC1 NR SL, in order not to interrupt the CC2 NR SL
   i) A method for not applying CC1 NR SL DRX; or,
   ii) A method of applying CC1 NR SL DRX only in a section without CC2 NR SL Tx or a section without CC2 NR SL Rx.
- If the priority of CC1 NR SL is higher than that of CC2 NR SL,
   A method for applying CC1 NR SL DRX regardless of the CC2 NR SL Tx section or the CC2 NR SL Rx section.
- Or, if the priority is not defined or the priority of the CC1 NR SL is the same as that of the CC2 NR SL,
   i) A method of applying CC1 NR SL DRX regardless of CC2 NR SL Tx section or CC2 NR SL Rx section; or,
   ii) A method of applying CC1 NR SL DRX only in a section without CC2 NR SL Tx or a section without CC2 NR SL Rx.
- or, regardless of priority,
   i) A method of applying CC1 NR SL DRX regardless of CC2 NR SL Tx section or CC2 NR SL Rx section; or,
   ii) A method of applying CC1 NR SL DRX only in a section without CC2 NR SL Tx or a section without CC2 NR SL Rx.

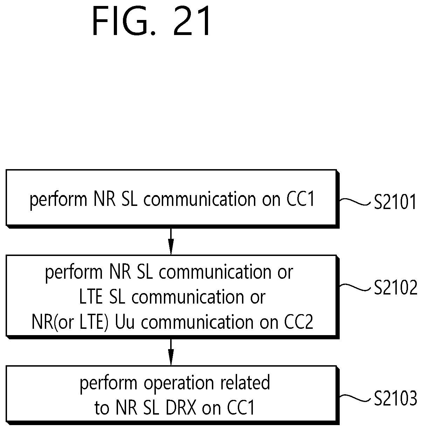

Hereinafter, with reference to FIG. 21 , the operation of the terminal described through various examples in the disclosure of the present specification will be described.

The following drawings are made to explain a specific example of the present specification. Since the names of specific devices or names of specific signals/messages/fields described in the drawings are provided as examples, the technical features of the present specification are not limited to the specific names used in the drawings below.

**FIG. 21** **shows an example of an operation of a terminal according to an embodiment of the disclosure of the present specification.**

FIG. 21 shows an example of an operation of a terminal according to the disclosure of the present specification. The content shown in FIG. 21 is only an example, and the scope of the disclosure of the present specification is not limited by FIG. 21 .

The terminal may perform operations according to various examples previously described in the disclosure of the present specification (e.g., first example to fifth example of the disclosure of the present specification).

For reference, in the example of FIG. 21 , steps S2101, S2102, and S2103 are shown to be sequentially performed. However, this is just an example. The order in which steps S2101, S2102, and S2103 are performed is not limited by the order shown in FIG. For example, steps S2101, S2102, and S2103 may be performed simultaneously. For example, step S2103 may be performed as part of step S2101.

In step S2101, a terminal (eg UE) may perform NR SL communication on CC1.

In step S2102, the terminal may perform NR SL communication, LTE SL communication, or NR (or LTE) Uu communication on CC2.

In step S2103, the terminal may perform an operation related to NR SL DRX on CC1. For reference, as described in the first example of the disclosure of the present specification, the terminal may receive the NR SL DRX configuration from the network (e.g., base station), or may store a preset NR SL DRX configuration as described in the second example of the disclosure of the present specification. The terminal may perform an operation related to NR SL DRX based on NR SL DRX configuration.

Here, the operation related to NR SL DRX may include an operation in which the terminal performs a transition related to NR SL DRX on CC1. For example, a transition involving NR SL DRX may include transition from NR SL Non-DRX state to NR SL DRX state, transition from NR SL DRX state to NR SL Non-DRX state, transition from On duration to Off duration of NR SL DRX, or transition from Off duration to On duration of NR SL DRX.

When the terminal performs an operation related to NR SL DRX in CC1, interruption may be applied to communication performed in CC2 (e.g., NR SL communication, LTE SL communication, or NR (or LTE) Uu communication). Here, the description of the interruption of the first to fifth examples of the disclosure of the present specification can be applied to the interruption due to the operation related to the NR SL DRX in CC1.

For example, based on performing a switch related to NR SL DRX in CC1, it may not be expected that NR SL communication or LTE SL communication or NR (or LTE) Uu communication on the second CC is performed in the interrupted slot or interrupted subframe.

As described above in the first to fifth examples of the disclosure of the present specification, the terminal may perform an operation related to NR SL DRX on CC1. For example, based on the priority of communication performed on CC2, the type of signal received on CC2, or a limit related to communication performance performed on CC2, the terminal performs an operation related to the NR SL DRX on CC1. may be In addition, as described in the fifth example of the disclosure of the present specification, the terminal may perform an operation related to NR SL DRX according to a combination of a band used in communication of CC1 and a band used in communication of CC2.

Also, in the example of FIG. 21 , a terminal may communicate with a base station. For example, the base station may transmit NR SL DRX configuration information to the terminal. Alternatively, the terminal may store NR SL DRX configuration information in a pre-configuration manner.

The terminal may transmit capability-related information to the base station. For example, the capability-related information includes information related that whether NR SL communication in CC1 and communication in CC2 (e.g., NR SL communication or LTE SL communication or NR (or LTE) Uu communication) is implemented as an individual chip in the terminal, or whether is implemented as a single chip. For another example, the capability-related information may include capability information (e.g., SL simultaneous Rx/Tx capability) indicating whether the terminal can simultaneously transmit and receive an SL signal.

According to the description in the disclosure of the present specification with reference to various examples, an operation related to NR SL DRX performed by a terminal can be clearly defined. In addition, due to the NR SL DRX operation performed by the terminal on CC1, an interruption applied to communication performed on CC2 (e.g., LTE SL communication, NR SL communication NR Uu (or LTE Uu) communication) can be clearly defined. Due to this, the terminal can efficiently perform an operation related to NR SL DRX. In addition, the network and / or terminal can efficiently manage SL resources. In addition, the terminal can efficiently perform NR SL communication on CC1 and other communication (e.g., LTE SL communication, NR SL communication NR Uu (or LTE Uu) communication) on CC2.

For reference, the operation of the UE described in the present disclosure may be performed by the device shown in FIG. 1 to FIG. 3. For example, the UE may be the first wireless device 100 or the second wireless device 200 shown in FIG. 1. For example, the operation of the UE described in the present disclosure may be processed by one or more processors 102 or 202. The operation of the UE described in the present disclosure may be stored in one or more memories 104 or 204 in the form of instruction/program (e.g., instruction, executable code, etc.) executable by the one or more processors 102 or 202. The one or more processors 102 or 202 may control the one or more memories 104 or 204 and the one or more transceivers 105 or 206 and may perform the operation of the UE described in the present disclosure by executing the instruction/program stored in the one or more memories 104 or 204.

Furthermore, the instructions for performing the operation of the UE described in the present disclosure may be stored in a non-volatile computer readable storage medium. The storage medium may be included in the one or more memories 104 or 204. In addition, the instructions stored in the storage medium may be executed by the one or more processors 102 or 202, and the operation of the UE described in the present disclosure may be performed.

For reference, the operation of the BS (e.g., NG-RAN, gNB, gNB (NB-IoT), gNB (NR) eNB, RAN, etc.) described in the present disclosure may be implemented by the device shown in FIG. 1 to FIG. 3. For example, the BS (e.g., NG-RAN, gNB, gNB (NB-IoT), gNB (NR) eNB, RAN, etc.) may be the first wireless device 100a or the second wireless device 100b shown in FIG. 1. For example, the operation of the BS (e.g., NG-RAN, gNB, gNB (NB-IoT), gNB (NR) eNB, RAN, etc.) described in the present disclosure may be processed by one or more processors 102 or 202. The operation of the UE described in the present disclosure may be stored in one or more memories 104 or 204 in the form of instruction/program (e.g., instruction, executable code, etc.) executable by the one or more processors 102 or 202. The one or more processors 102 or 202 may control the one or more memories 104 or 204 and the one or more transceivers 105 or 206 and may perform the operation of the BS (e.g., NG-RAN, gNB, gNB (NB-IoT), gNB (NR) eNB, RAN, etc.) described in the present disclosure by executing the instruction/program stored in the one or more memories 104 or 204.

Furthermore, the instructions for performing the operation of the BS (e.g., NG-RAN, gNB, gNB (NB-IoT), gNB (NR) eNB, RAN, etc.) described in the present disclosure may be stored in a non-volatile (or non-transitory) computer readable storage medium. The storage medium may be included in the one or more memories 104 or 204. In addition, the instructions stored in the storage medium may be executed by the one or more processors 102 or 202, and the operation of the BS (e.g., NG-RAN, gNB, gNB (NB-IoT), gNB (NR) eNB, RAN, etc.) described in the present disclosure may be performed.

So far, the preferred embodiment has been described in an exemplary manner. However, the disclosure of the present specification is not limited to the specific embodiment and may be modified, altered, or improved in various forms within the inventive concept and the scope written in the claims of the present disclosure.

In the exemplary system described above, the methods are described based on a flowchart as a series of steps or blocks. However, the methods are not limited to the order of the steps described above, and a certain step may be performed in a different order or performed simultaneously. Furthermore, it is understood that the steps shown in the flowchart are not mutually exclusive, but another step may be included, or one or more steps may be deleted without influencing the scope to those ordinary skilled in the art.

Claims in the present description can be combined in various ways. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing sidelink (SL) communication, the method performed by for a User Equipment (UE):
performing New Radio (NR) SL communication on a first component carrier (CC);
performing NR SL communication or LTE SL communication on a second CC; and
performing an operation related to NR SL discontinuous reception (DRX) on the first CC,
wherein the operation related to the NR SL DRX includes an operation of performing a transition related to the NR SL DRX,
based on the transition being performed, it is not expected that NR SL communication or LTE SL communication on the second CC will be performed in an interrupted slot or an interrupted subframe,
based on the priority of communication performed on the second CC, the type of signal received on the second CC, or a limit related to communication performance performed on the second CC, the operation related to the NR SL DRX on the first CC is limited.

2. The method of claim 1,
wherein the number of interrupted subframes is configured based on whether NR SL communication on the first CC and LTE SL communication on the second CC are synchronized.

3. The method of claim 1,
wherein the number of interrupted slots is set based on the subcarrier spacing (SCS) of NR SL communication on the second CC and whether NR SL communication on the first CC and LTE SL communication on the second CC are synchronized.

4. The method of claim 1,
wherein the transition related to the NR SL DRX is one of transition from NR SL Non-DRX state to NR SL DRX state, transition from NR SL DRX state to NR SL Non-DRX state, transition from On duration of NR SL DRX to Off duration, or the transition from Off duration to On duration of NR SL DRX.

5. The method of claim 1,
based on the priority of communication performed on the second CC being higher than the priority of NR SL communication on the first CC, the transition related to the NR SL DRX is performed at the n+kth slot when resources for the NR SL communication or the LTE SL communication on the second CC are not allocated,
wherein n is an integer greater than or equal to 0, k is an integer greater than or equal to 1,
wherein the n slot is configured to perform transition related to the NR SL DRX, but is a slot to which resources for the NR SL communication or the LTE SL communication on the second CC are allocated,
wherein the n+k slot is a slot to which resources for the NR SL communication or the LTE SL communication on the second CC are not allocated.

6. The method of claim 1,
based on the signal received on the second CC including an SL Synchronization Signal Block (SSB) or PSFCH, transition related to the NR SL DRX is performed in an n+k th slot when the SL SSB or PSFCH is not received,
wherein n is an integer greater than or equal to 0, k is an integer greater than or equal to 1, wherein the n slot is configured to perform transition related to the NR SL DRX, but is a slot in which the SL SSB or PSFCH is received,
wherein the n+k slot is a slot in which the SL SSB or PSFCH is not received.

7. The method of claim 5 or 6, further comprising:
transmitting information related to the n+k slot to a base station.

8. The method of claim 1,
wherein the transition related to the NR SL DRX is limited so that a throughput loss on the second CC according to the interrupted slot or the interrupted subframe is within a first ratio.

9. The method of claim 1,
wherein the transition related to the NR SL DRX is limited so that a missed probability of ACK/NACK on the second CC according to the interrupted slot or the interrupted subframe is within a second ratio.

10. The method of claim1, further comprising:
transmitting capability information related to whether the NR SL communication on the first CC and the NR SL communication or LTE SL communication on the second CC are implemented based on a single chip to the base station

11. The method of claim1, further comprising:
performing NR Uu communication or LTE Uu communication on the second CC,
based on the transition being performed, it is not expected that the NR Uu communication or LTE Uu communication on the second CC is performed in an interrupted slot or an interrupted subframe,
based on the priority of communication performed on the second CC, the type of signal received on the second CC, or a limit related to communication performance performed on the second CC, an operation related to the NR SL DRX on the first CC is limited.

12. The method of claim 11,
for uplink communication of the LTE Uu communication, wherein the number of interrupted subframes is set based on whether NR SL communication on the first CC and uplink communication of the LTE Uu communication on the second CC are synchronized,
for downlink communication of the LTE Uu communication, wherein the number of interrupted subframes is set based on whether NR SL communication on the first CC and downlink communication of the LTE Uu communication on the second CC are synchronized.

13. The method of claim 11,
for uplink communication of the NR Uu communication, wherein the number of interrupted slots is set based on the subcarrier spacing (SCS) of NR SL communication on the second CC and whether uplink communication of the NR SL communication on the first CC and the NR Uu communication on the second CC are synchronized,
for downlink communication of the NR Uu communication, wherein the number of interrupted slots is set based on Subcarrier spacing (SCS) of NR SL communication in the second CC and whether downlink communication of the NR SL communication on the first CC and the NR Uu communication on the second CC are synchronized.

14. A User Equipment (UE) for performing sidelink communication,
at least one transceiver;
at least one processor; and
at least one memory that stores instructions and is operably electrically connectable with the at least one processor;
wherein operations performed based on the instructions being executed by the at least one processor comprising:
performing New Radio (NR) SL communication on a first component carrier (CC);
performing NR SL communication or LTE SL communication on a second CC; and
performing an operation related to NR SL discontinuous reception (DRX) on the first CC,
wherein the operation related to the NR SL DRX includes an operation of performing a transition related to the NR SL DRX,
based on the transition being performed, it is not expected that NR SL communication or LTE SL communication on the second CC will be performed in an interrupted slot or an interrupted subframe,
based on the priority of communication performed on the second CC, the type of signal received on the second CC, or a limit related to communication performance performed on the second CC, the operation related to the NR SL DRX on the first CC is limited.

15. The UE of claim 14,
wherein the UE is an autonomous driving device that communicates with at least one of a mobile terminal, a network, and an autonomous vehicle other than the UE.

16. An apparatus in mobile communication,
at least one processor; and
at least one memory that stores instructions and is operably electrically connectable with the at least one processor;
wherein operations performed based on the instructions being executed by the at least one processor comprising:
performing New Radio (NR) SL communication on a first component carrier (CC);
performing NR SL communication or LTE SL communication on a second CC; and
performing an operation related to NR SL discontinuous reception (DRX) on the first CC,
wherein the operation related to the NR SL DRX includes an operation of performing a transition related to the NR SL DRX,
based on the transition being performed, it is not expected that NR SL communication or LTE SL communication on the second CC will be performed in an interrupted slot or an interrupted subframe,
based on the priority of communication performed on the second CC, the type of signal received on the second CC, or a limit related to communication performance performed on the second CC, the operation related to the NR SL DRX on the first CC is limited.

17. A non-transitory computer readable storage medium having recorded instructions,
wherein the instructions, when executed by one or more processors, cause the one or more processors to perform operations comprising:
performing New Radio (NR) SL communication on a first component carrier (CC);
performing NR SL communication or LTE SL communication on a second CC; and
performing an operation related to NR SL discontinuous reception (DRX) on the first CC,
wherein the operation related to the NR SL DRX includes an operation of performing a transition related to the NR SL DRX,
based on the transition being performed, it is not expected that NR SL communication or LTE SL communication on the second CC will be performed in an interrupted slot or an interrupted subframe,
based on the priority of communication performed on the second CC, the type of signal received on the second CC, or a limit related to communication performance performed on the second CC, the operation related to the NR SL DRX on the first CC is limited.
